# FASCICULE DE BREVET EUROPEEN

(11) **EP 1 069 570 B1**
(45) Date de publication et mention de la délivrance du brevet: **27.09.2006**
(21) Numéro de dépôt: 00401833.9
(22) Date de dépôt: 27.06.2000
(51) Int. Cl.: G11B 27/00, G11B 27/34, G07F 17/30, H04H 1/02

(54) **Système de gestion à distance d'au moins un dispositif de reproduction d'informations audiovisuelles**
Fernverwaltungssystem für wenigstens ein audio-visuelles Wiedergabegerät
Remote management system for at least one audio-visual reproduction apparatus

(30) Priorité: 16.07.1999 FR 9909225
(43) Date de publication de la demande: 17.01.2001
(73) Titulaire: TOUCHTUNES MUSIC CORPORATION, Las Vegas, NV 89104 (US)
(72) Inventeur: Nathan, Guy, Nun's Island, Quebec, H3E 1H7 (CA); Bourdelais, Jean-Marc, Saint Sauveur, Quebec J0R 1R7 (CA); Mastronardi, Tony, Pierrefonds, Quebec H8Y 3L2 (CA)
(74) Mandataire: Debay, Yves

(56) Documents cités:
- EP-A- 0 817 103
- EP-A- 0 919 964
- EP-A- 0 982 695
- WO-A-96/12255
- WO-A-98/45835
- US-A- 5 355 302
- US-A- 5 726 909
- US-A- 5 887 139

## Description

La présente invention concerne un système de gestion d'au moins un dispositif de reproduction d'informations audiovisuelles.

Il est connu par la demande de brevet internationale WO 96/12255 un dispositif de reproduction d'informations audiovisuelles communément appelé juke-box. Ce juke-box est élaboré autour d'une unité centrale gérant des moyens de reproduction audiovisuelle et des moyens de mémorisation d'au moins une information audiovisuelle correspondant à la reproduction sonore d'une chanson. L'unité centrale gère également des moyens de télécommunication tels qu'un modem pour permettre, notamment le téléchargement d'informations audiovisuelles à partir d'un serveur central. La gestion des commandes de nouvelles chansons et le paramétrage nécessitent soit le déplacement d'un opérateur sur les lieux d'implantation du juke-box, soit l'utilisation par l'opérateur d'un ordinateur possédant une liaison avec le serveur central. De plus, les opérations de gestion réalisables, par l'intermédiaire de la liaison avec le serveur central, sont limitées à la commande de nouvelles sélections musicales.

Le document US-A-5 355 302 décrit un système de gestion à distance de dispositifs de reproduction d'informations audiovisuelles comprenant un serveur central connecté aux moyens de télécommunication des dispositifs de reproduction d'informations audiovisuelles, le serveur central comprenant des moyens de mémorisation permettant de stocker une base de données comprenant des informations de gestion des dispositifs, telles que des informations relatives à leur utilisation et l'ensemble des informations audiovisuelles disponibles. Le serveur central permet de modifier des menus de sélection de musique, des librairies de musique et des informations graphiques associées ainsi que de télécharger ou de supprimer des chansons.

Le document US-A-5 887 139 décrit un serveur central comprenant un gestionnaire de site "Internet" accessible à distance par un opérateur chargé de la gestion de plusieurs dispositifs de réseau et comprenant une pluralité d'écrans permettant à l'opérateur de visualiser la liste des dispositifs de réseau ainsi que d'accéder aux informations relatives à leur utilisation et configuration.

La présente invention a donc pour objet de pallier les inconvénients de l'art antérieur en proposant un système de gestion à distance de systèmes intelligents de reproduction d'informations audiovisuelles implantés localement permettant de limiter les déplacements de l'opérateur pour réaliser des opérations de gestion et de paramétrage.

Ce but est atteint par le système de gestion à distance d'un dispositif de reproduction d'informations audiovisuelles selon la revendication 1.

Des développements de l'invention sont décrits dans les revendications 2 à 22.

D'autres particularités et avantages de la présente invention apparaîtront plus clairement à la lecture de la description ci-après faite en référence aux dessins annexés dans lesquels :
- la figure 1 représente un synoptique du système selon l'invention,
- les figures 2A à 2J représentent des exemples d'écrans du site " Internet ".
- la figure 3 représente un exemple de dispositif de reproduction audiovisuelle.
- la figure 4 représente un exemple de logigramme des relations entre les modules de librairies et les modules d'objets du système d'exploitation du dispositif de reproduction audiovisuelle.
- la figure 5 représente un organigramme simplifié de la structure d'une base de données utilisée par le système selon l'invention.
- les figures 6A à 6F représentent un organigramme détaillé de la structure d'une base de données utilisée par le système selon l'invention.

Avant de décrire en détail le système de gestion à distance du dispositif de reproduction audiovisuelle selon l'invention, il convient de rappeler la constitution d'un dispositif de reproduction audiovisuelle et son mode de fonctionnement.

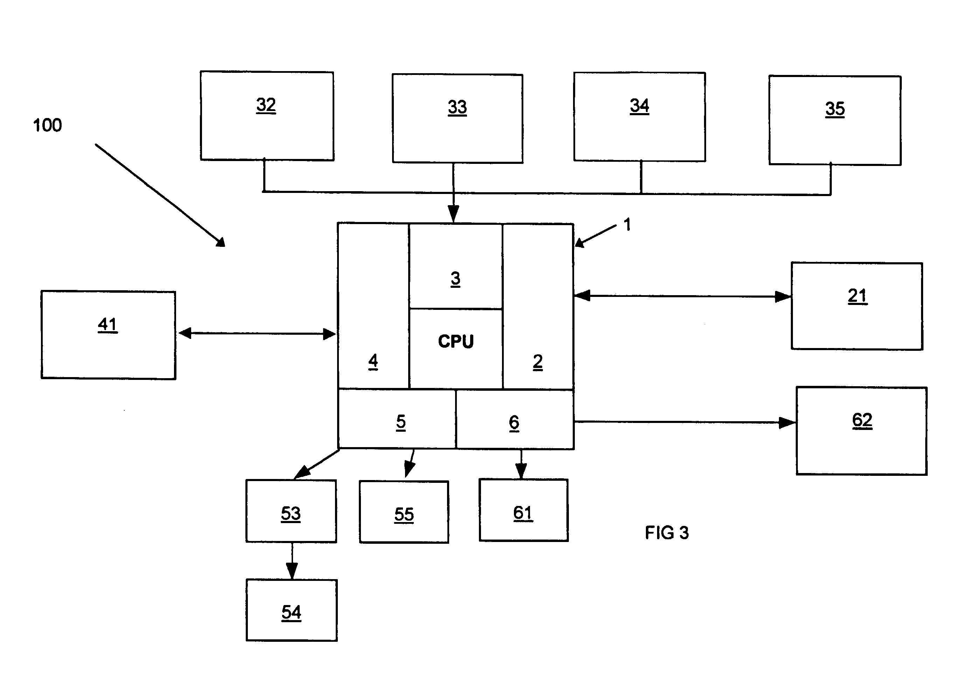

La figure 3 représente un exemple de dispositif de reproduction d'informations audiovisuelles. Un tel dispositif est décrit, notamment dans la demande de brevet internationale WO 96/12255 déposée par la requérante. De préférence, mais cependant de manière non limitative, ce dispositif de reproduction d'informations audiovisuelles utilise les éléments matériels énumérés et référencés ci-après.

L'unité centrale (1) à microprocesseur est un système compatible PC de haute performance, le choix lors de la mise en oeuvre s'est porté sur un système du type Intel pentium qui possède des moyens de mémorisation et au moins les caractéristiques suivantes :
- compatibilité avec le bus local Vesa,
- antémémoire du processeur: 256 kO,
- mémoire vive: RAM de 32 MO
- ports série et parallèle de haute performance,
- adaptateur graphique type SVGA à microprocesseur
- contrôleur de bus type SCSI/2,
- mémoire vive RAM statique auto-alimentée.

Toute autre unité centrale possédant des performances équivalentes ou supérieures pourra être utilisée dans l'invention.

Cette unité centrale commande et gère un circuit de commande de son (5), un circuit (4) de commande des télécommunications, un circuit (3) de commande des entrées, un circuit (2) de commande de la mémorisation de masse, un circuit (6) de commande des moyens de visualisation. Les moyens de visualisation se composent principalement d'un moniteur vidéo (62) à écran plat sans entrelacement de type SVGA à haute résolution et faible rayonnement, c'est ce moniteur qui est utilisé pour la reproduction d'images (par exemple les couvertures d'albums des sélections musicales), de graphiques ou de clips vidéo.

Faisant partie également des moyens de mémorisation, des modules de stockage (21) utilisant des disques durs de type SCSI haute vitesse et haute capacité sont associés aux moyens de mémorisation déjà présents dans le dispositif à microprocesseur. Ces modules servent au stockage d'informations audiovisuelles.

Un adaptateur de modem de télécommunications (41) haute vitesse 28,8 kbps est intégré pour autoriser la liaison avec un réseau de distribution d'informations audiovisuelles contrôlé par un serveur central.

Pour la reproduction des informations sonores des sélections musicales, le système comporte des haut-parleurs (54) recevant le signal d'un amplificateur-tuner (53) relié au circuit électronique (5) de type synthétiseur de musique prévu pour supporter un grand nombre de sources d'entrée tout en fournissant une sortie présentant une qualité de type CD (disque compact), telle que, par exemple, l'adaptateur audio multimédia à microprocesseur, du type carte son.

Le dispositif de reproduction audiovisuelle gère, par le biais de son circuit contrôleur d'entrée (3), un écran tactile (33) incluant un panneau de revêtement de la vitre utilisant la "technologie avancée d'onde de surface" ainsi qu'un contrôleur de bus de type AT. Cet écran tactile permet de sélectionner, sur l'affichage du moniteur vidéo (62) ou l'écran d'un téléviseur (61), diverses informations de sélection utilisées par les clients, ainsi que des informations de commande et de contrôle de gestion utilisées par le gérant ou le propriétaire du système. Il est également utilisé à des fins de maintenance en combinaison avec un clavier externe (34) qui peut être relié au système qui possède pour cela un connecteur de clavier, contrôlé par un verrou à clé (32) à travers le circuit d'interface (3).

Un dispositif de paiement de redevances (35) est également relié au circuit d'interface d'entrée (3). Il est également possible d'utiliser tout autre dispositif qui permette la réception de tout mode de paiement par pièces, billets, jetons, cartes magnétiques à puces ou combinaison des moyens de paiement.

Le système est logé dans un châssis ou bâti en acier.

Outre ces éléments, un microphone (55) sans fil est relié au contrôleur de son (5), ce qui permet de transformer ce dernier en un puissant système d'annonces et d'informations destinées au public ou éventuellement en machine de karaoké. De même, un système de haut-parleurs sans fil peut être utilisé par le système.

Le logiciel d'exploitation du dispositif a été élaboré autour d'une librairie d'outils et de services très largement orientée vers le domaine audiovisuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit d'opérations réalisées sur les moyens de visualisation, les moyens de reproduction sonores de même que la gestion des liaisons de télécommunications au travers du réseau de distribution. De plus, ce logiciel présente une grande flexibilité.

Le système d'exploitation est partagé en modules comportant un premier module d'amorçage (7) lui-même subdivisé en un premier module (70) de programme principal "JUK.EXE" qui vérifie la mémoire et vérifie si le minimum d'objets est présent pour assurer le fonctionnement de chacun des dispositifs (100.1 à 100.n) de reproduction d'informations audiovisuelles ; un second module (71) lié dynamiquement et dépendant de celui-ci est constitué par le module "JUKECORE.DLL". La fonction de ce second module (71) est de contenir les librairies de langage C et d'assurer la tâche principale.

L'architecture du système d'exploitation comporte une répartition des différentes tâches en modules logiciels reliés entre eux par des liens dynamiques ou constitués de sous-programmes exécutables présentant des liens de dépendance principale avec d'autres parties du système d'exploitation. Chacun des modules est constitué de fichiers d'objets ou de librairies de liens dynamiques "dynamic links library" organisés selon une pluralité de niveaux de dépendance décrits dans les attributs. Les attributs d'un objet ou d'une librairie indiquent le numéro de version et les dépendances du fichier d'objet ou de la librairie par rapport à d'autres fichiers d'objets, comme décrit ci-après pour le module PARSER. Chaque attribut indique le niveau attribué au module. Ainsi, le module JUK.EXE (70) est de niveau supérieur aux modules JUKECORE (71), TLS (72), CRDE (73), GFX (74), WDLL (75), JEEP (9) et TELECOM (10), mais le module TELECOM (10) est dépendant du module JEEP (9) (voir lien 910), donc de niveau inférieur à JEEP (9).

De même, JEEP (9) (voir lien 759) est de niveau inférieur au module WDLL (75), car dépendant de celui-ci et TLS (lien 725) de niveau supérieur à WDLL (75). En revanche, TLS et GFX peuvent être de même niveau. La tâche principale comporte un module (JUKECORE) destiné à initialiser ou charger le module (73), le noyau du programme "CRDE.DLL", à initialiser ou charger le module (74) de gestion des graphiques (GFX), à initialiser ou charger le module (75) de chargement (WDLL.DLL) des librairies, à charger le module (10) Télécom des tâches de télécommunications (DLL), à charger le module (72) TLS.DLL qui contient toutes les utilisations nécessaires au dispositif (100.1 à 100.n) de reproduction d'informations audiovisuelles, aux télécoms, heure, décryptage, etc....., à initialiser ou charger la librairie des programmes JEEP (Juke Execution Exchange Protocol) assurant les tâches de serveur d'intégrité, de requête de chargement et le dialogue avec le serveur et à lancer le programme (80, SILOAD.DLL) en tant que tâche principale. La tâche principale de l'application juke-box comporte un module (SILOAD.DLL) contenant la librairie du programme chargeur destiné à vérifier les versions de librairie à liens dynamiques requises dans (WDLL), de les charger ou d'appeler le module des tâches Télécom pour effectuer le transfert de fichiers. Le module WDLL DLL comporte la liste dans un fichier (DLL.DEFAULT) des versions minimales nécessaires au fonctionnement ainsi que la liste de toutes les fonctions représentées soit par des bibliothèques (LIBRARY) (DLL, DJL), soit par des fichiers d'objets (DJO). Chaque objet ou bibliothèque contient la liste de toutes les fonctions, dont la bibliothèque ou l'objet a besoin, ainsi que les numéros de version et les dépendances. Le module WDLL fait la gestion de tous les nouveaux modules, s'assure des interdépendances et vérifie que les modules téléchargés n'ont aucune dépendance et ont été chargés avec les versions nécessaires. La partie applicative (8) propre à un dispositif (100.1 à 100.n) de reproduction d'informations audiovisuelles comporte un certain nombre de modules chargés et lancés par SILOAD et définissant les fenêtres de l'affichage qui sont les suivantes :
- un module (81) d'exploitation des signaux souris ou de l'écran tactile ;
- un module (82) d'exploitation des messages échangés entre les objets et les différents autres modules ;
- un module (83) FIL.DJL de gestion des fichiers sur disques ;
- un module (84) FILIO.DJL de lecture-écriture de fichiers sur disques ;
- un module (85) JSTRUCT.DJL de surveillance de tous les événements générés par les équipements, tels que l'écran tactile, la carte son, l'interface de traitement des équipements monétaires.

SILOAD gère le chargement des modules spécifiques à la tâche du terminal, à savoir tous les modules DJL déjà énumérés ainsi que les modules de librairie juke-box (87) constitués par WOBJECT (870) qui gère les objets, tels que le mixeur, les achats ; le module WCURSOR (871) qui gère les mouvements du curseur ; le module (872) DBMAPI qui gère la base de données ; le module (873) WFONTS qui gère tous les types de fonte ; le module (874) PARSER (Programme d'analyse syntaxique) qui analyse et génère les écrans à partir du script et vérifie la grammaire à l'aide du module (876) "GRAMMAR.DJL" et le module (875) "LEXY.DJL" qui est le module lexique d'assignation des fonctions des mots à l'intérieur du langage. Le module PARSER (874) contient dans son en-tête de fichier les informations suivantes :
- char *parser_version_info= "DLL_INFO DJL;"
   "DLL-NAME PARSER.DJL;"
   "VERSION 1;"
   "CREATOR KENDALF;"
   "REQUIRIES lexyy.djl;4;"
   "REQUIRIES grammar-.djl;5";

Tous les modules et toutes les librairies (DJO, DLL, DJL) contiennent des informations semblables à celles du module PARSER et ces informations déterminent les nécessités de version et de dépendance.

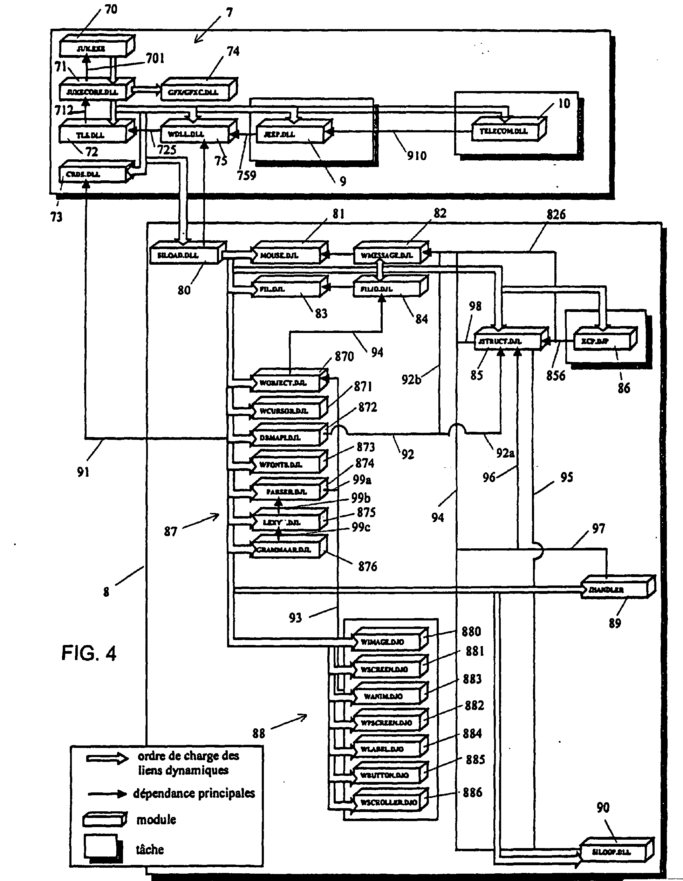

Ainsi, le module PARSER a besoin des modules LEXY version 4 et GRAMMAR version 5 pour permettre son exécution par le système. Les flèches doubles de la figure 4, reliant les différents modules entre eux, donnent l'ordre de chargement des différents fichiers. Ainsi, comme on l'a vu précédemment, il faudra commencer par charger JUKE.EXE pour ensuite charger JUKECORE.DLL et pouvoir, à partir de JUKECORE.DLL, charger GFX.DLL, TLS.DLL, WDLL.DLL, JEEP.DLL, TELECOM.DLL, CRDE.DLL et SILOAD.DLL.

Les flèches uniques représentent les dépendances entre fichiers. Ainsi, la flèche (91) indique que les fichiers DJL et en particulier, DBMAPI sont dépendants de CRDE.DLL. La flèche (93) montre que les fichiers DJO sont dépendants du module WOBJECT.DJL. Le module WOBJECT.DJL est lui-même dépendant du module FILIO.DJL. La flèche (92a) indique que DBMAPI.DJL est dépendant de JSTRUCT.DJL et la flèche (92b) que DBMAPI.DJL est dépendant de WMESSAGE.DJL. La flèche (98) indique que JSTRUCT.DJL est dépendant du fichier WMESSAGE.DJL. WMESSAGE est dépendant du fichier MOUSE.DJL et FILIO.DJL étant dépendant du fichier FIL.DJL. Le fichier XCP.DJL est dépendant, par la flèche (856), de JSTRUCT.DJL et, comme indiqué par la flèche (826) de WMESSAGE.DJL. Le fichier JHANDLER est dépendant, par la flèche (97) de WMESSAGE.DJL et, comme représenté par la flèche (96) de JSTRUCT.DJL. Le fichier SILOOP.DLL est dépendant, comme représenté par la flèche (95), de JSTRUCT.DJL et par la flèche (94) de WMESSAGE.DJL. Le fichier TELECOM.DLL est dépendant, comme indiqué par la flèche (910), de JEEP.DLL qui est lui-même dépendant, comme montré par la flèche (959), de WDLL.DLL. Le fichier WDLL.DLL est dépendant, par la flèche (725), de TLS.DLL. De même, la flèche (89c) montre que GRAMMAR.DJL est dépendant de LEXY.DLL et, par la flèche (99b), que LEXY.DJL est dépendant de PARSER.DJLL. Ainsi, comme on a pu le voir précédemment, PARSER a besoin de LEXY et de GRAMMAR pour s'exécuter et la version 1 de PARSER fait appel à la version 4 de LEXY.DJL et à la version 5 de GRAMMAR.DJL. De même, WOBJECT.DJL est dépendant par la flèche (99a) de PARSER.DJL. Ainsi, tous les modules et toutes les librairies .DJO, .DLL, .DJL contiennent des informations semblables à celles du module PARSER qui déterminent les nécessités de version des différents modules dont un module donné est dépendant. Ces informations donnent également les dépendances du module vis-à-vis des autres modules, comme cela est indiqué par les flèches sur la figure 4.

Le module de chargement de librairie SILOAD charge également ou lance un module SILOOP.DLL (90) qui est une boucle d'attente d'événement. Un ensemble de modules (88) contient la liste des fichiers qu'il faut inclure pour gérer les fenêtres d'un affichage fenêtre prévu sur le moniteur du terminal de type juke-box.

Cette liste d'objets est constituée :
- d'un fichier d'objets (883) "WPSCREEN.DJO" qui permet de définir la page principale sur le moniteur ;
- d'un fichier d'objets (881) "WSCREEN" qui permet de déterminer dans cette page principale le nombre d'écrans disponibles et ainsi permettre l'affichage de plusieurs fenêtres ou écrans ;
- d'un fichier d'objets (880) "WIMAGE.DJO" qui permet de déterminer et de définir dans l'écran l'image qu'il utilisera ;
- d'un fichier d'objets (882) "WANIM.DJO" qui permet de définir l'animation lorsque l'image est animée ;
- d'un fichier d'objets (885) "WBUTTON.DJO" qui permet de définir et gérer les boutons qui sont utilisés sur l'écran de la page principale tels que les boutons d'actionnement utilisés dans l'interface graphique définie dans la demande de brevet PCT WO 96/12258 ;
- d'un fichier d'objets (884) "WLABEL.DJO" qui permet de créer des étiquettes permettant l'écriture par-dessus un objet ; et
- d'un fichier d'objets (886) "WSCROLLER.DJO" qui permet de définir des zones d'affichage à défilement vertical.

Une librairie "JHANDLER" permet de définir les utilisations fixes des écrans et donc, de déterminer quelles sont les interfaces qui assurent la liaison avec les différents objets définis par les modules précédents.

Le module (86) de librairie "XCP" permet de gérer les tâches de paiement telles que les systèmes de réception de billets ou les unités de paiement à monnaie ou à carte et permet également la sauvegarde des informations de base dans le IBUTTON qui est un circuit intégré de mémorisation de codes secrets pour l'utilisateur.

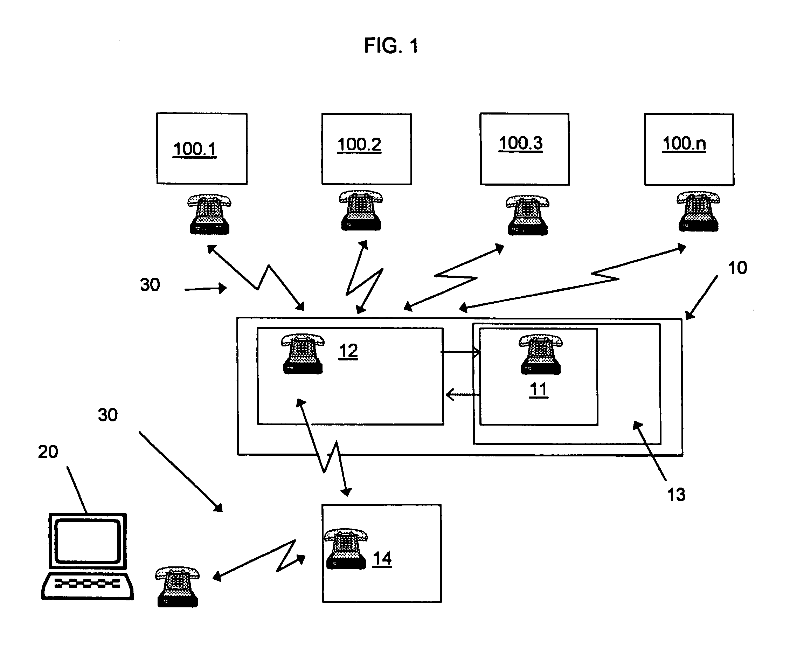

La figure 1 représente un synoptique du système selon l'invention. Selon l'art antérieur, chaque dispositif (100.1 à 100.n) de reproduction audiovisuelle communique avec le serveur central (10) par l'intermédiaire de ses moyens de télécommunication, et par exemple, un modem relié au réseau téléphonique (30). Le serveur central (10) comprend à cet effet des moyens de communication (121, 111) tels que, par exemple, au moins un modem connecté au réseau téléphonique. Le serveur (10) central comprend également une base (11) de données regroupant pour chaque dispositif (100.1 à 100.n) de reproduction d'informations audiovisuelles toutes les informations relatives à son fonctionnement, c'est-à-dire les paramètres de fonctionnement du dispositif (100.1 à 100.n) de reproduction d'informations audiovisuelles, son numéro d'identification, la liste des chansons mémorisées sur le dispositif (100.1 à 100.n) de reproduction d'informations audiovisuelles, l'opérateur chargé de la gestion du ou des dispositifs (100.1 à 100.n) de reproduction d'informations audiovisuelles. La base de données comprend également les statistiques relatives à l'utilisation de chaque dispositif (100.1 à 100.n) de reproduction d'informations audiovisuelles, c'est-à-dire la liste des chansons jouées ainsi que la date à laquelle chaque chanson a été jouée, la liste et la date d'éventuels incidents survenus pendant l'utilisation de chaque dispositif (100.1 à 100.n) de reproduction d'informations audiovisuelles, notamment la mise hors tension, les coupures de communication, le nombre de fois où les moyens de paiement n'ont pas accepté l'argent introduit. De même, la base de données comprend la liste des chansons disponibles stockées dans les moyens de mémorisation du serveur central (10), les informations audiovisuelles nécessaires à la reproduction de ces chansons, ainsi que les outils de configuration nécessaires à l'installation du système d'exploitation de chaque dispositif (100.1 à 100.n) de reproduction d'informations audiovisuelles. L'ensemble des informations contenues dans la base de données (11) est mis à jour par l'intermédiaire de communications, par exemple périodiques, avec chaque dispositif (100.1 à 100.n) de reproduction d'informations audiovisuelles via le réseau téléphonique et les modems de chaque dispositif (100.1 à 100.n) de reproduction d'informations audiovisuelles et de la base de données ou du serveur central (10).

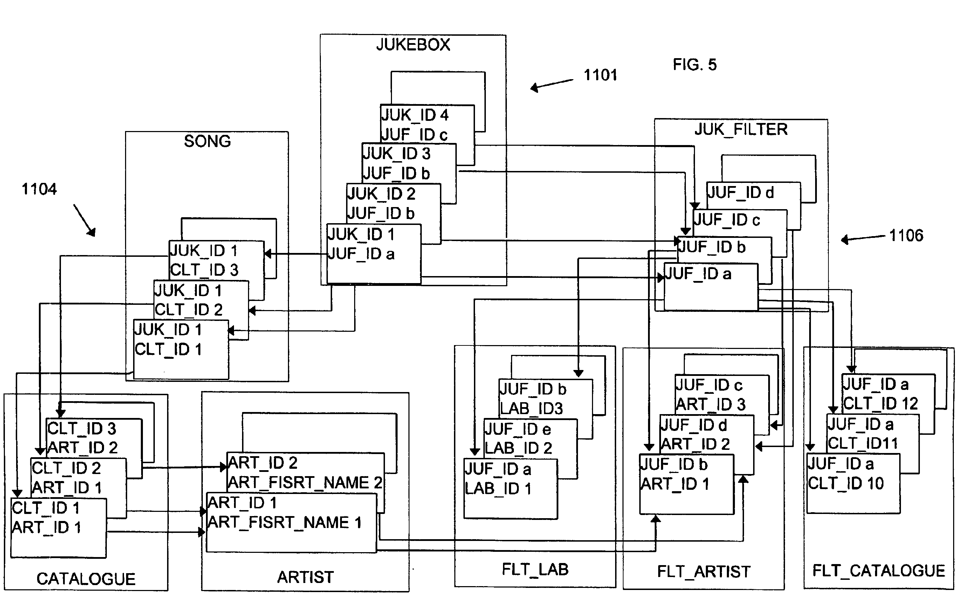

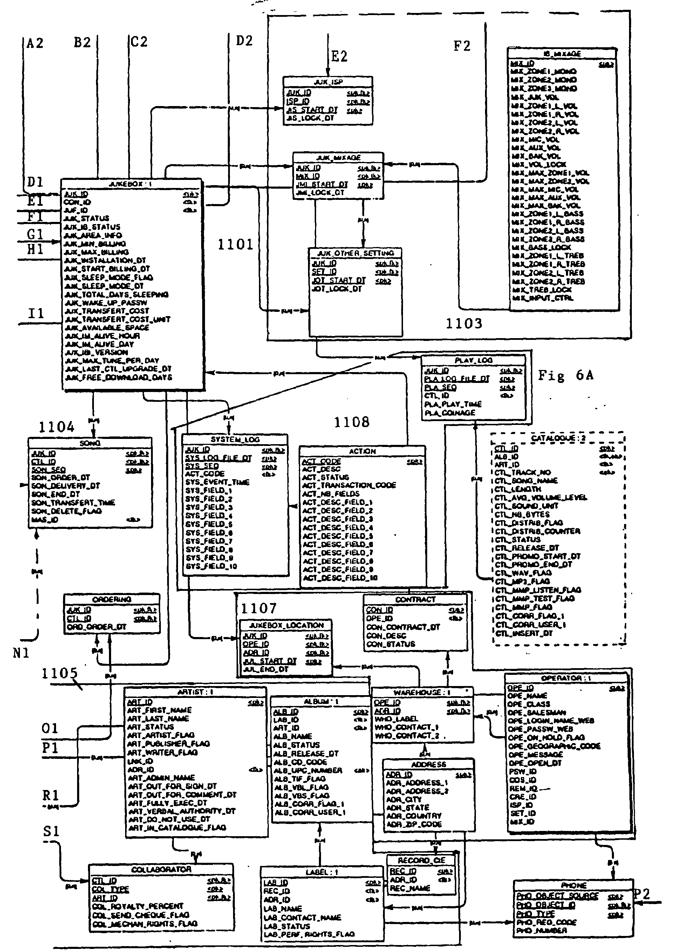

Un exemple de base de données (11) utilisé dans le système de gestion selon l'invention va à présent être décrit en référence aux figures 5 et 6A à 6F. L'ensemble des informations de la base de données (11) est stocké sous forme de tableaux. Chaque tableau regroupe les informations relatives à un thème ou structure ou fonctionnalité particulière des dispositifs (100.1 à 100.n, fig. 1) de reproduction d'informations audiovisuelles. Chaque information est identifiée par un argument compris dans un tableau de la base de données (11). Les informations d'un tableau peuvent être liées à un autre tableau. Cette liaison est établie lorsqu'au moins un argument est commun aux deux tableaux.

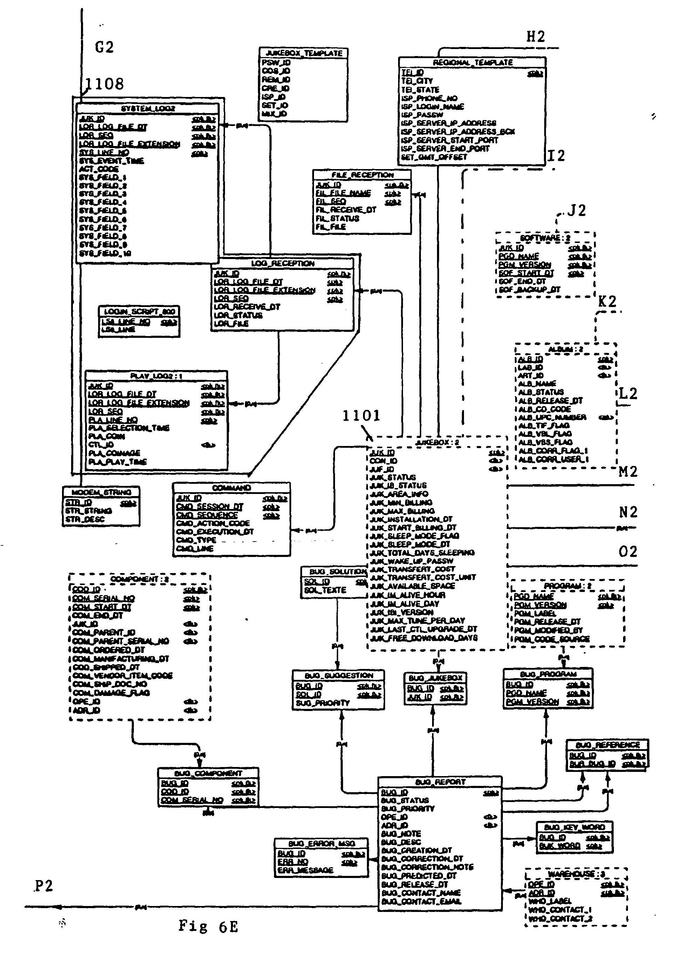

Selon l'invention, la base de données (11) comprend au moins un premier ensemble de tableaux (1101, fig. 5 et 6A et 6E) représentant les informations concernant directement le dispositif (100.1 à 100.n, fig. 1) de reproduction d'informations audiovisuelles, comme par exemple son statut de fonctionnement (JUK_STATUS, fig. 6A), ou son numéro d'identification (JUK_ID, fig. 6A), ou encore l'espace mémoire disponible (JUK_AVAILABLE_SPACE, FIG. 6A). Chaque rangée d'un tableau (1101) représente des informations concernant un dispositif (100.1 à 100.n, fig. 1) de reproduction d'informations audiovisuelles, identifié dans ce tableau par son numéro d'identification (JUK-ID, FIG. 6A).

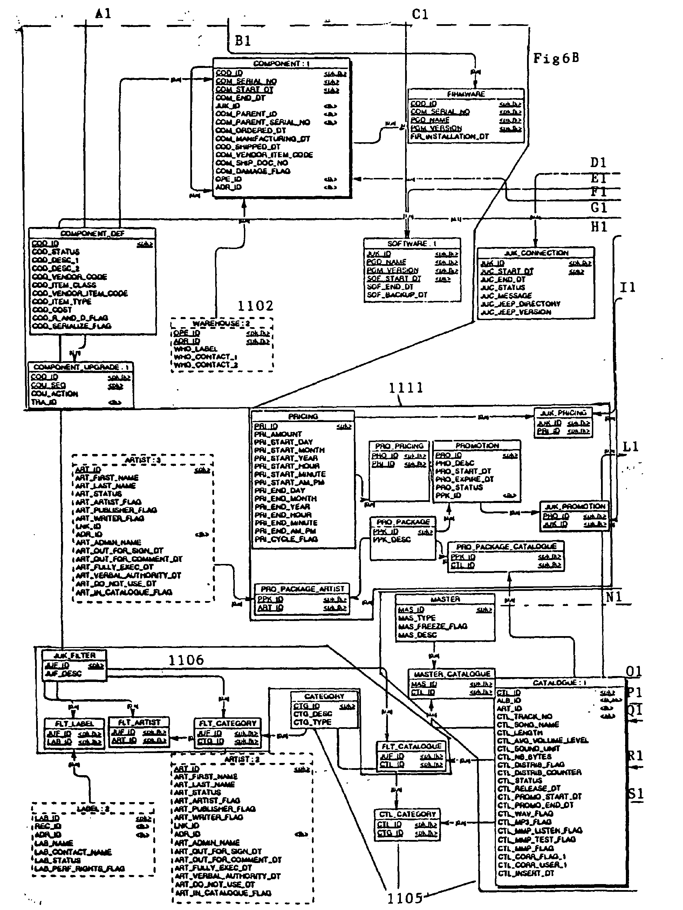

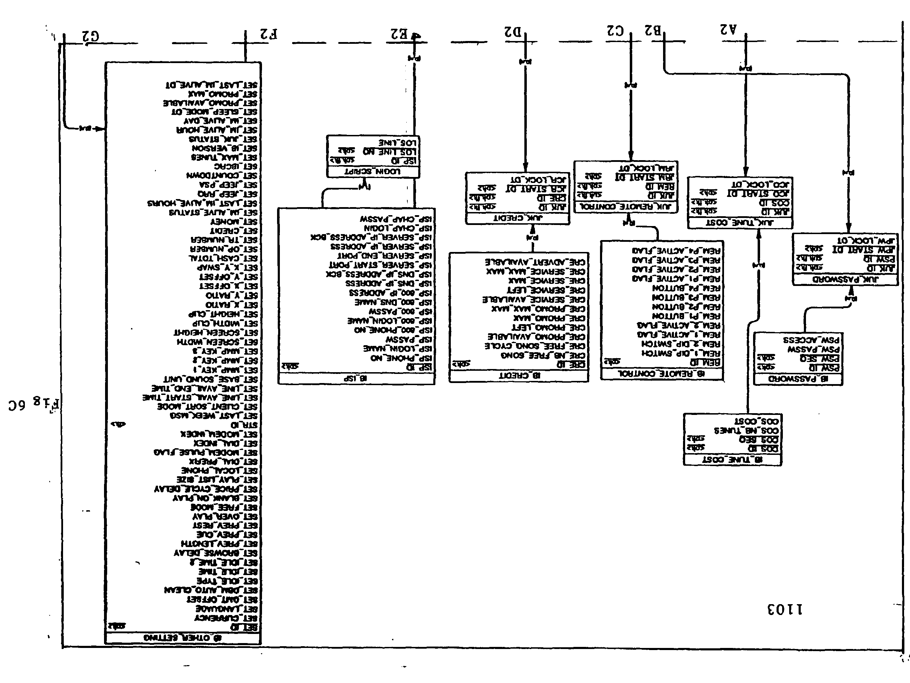

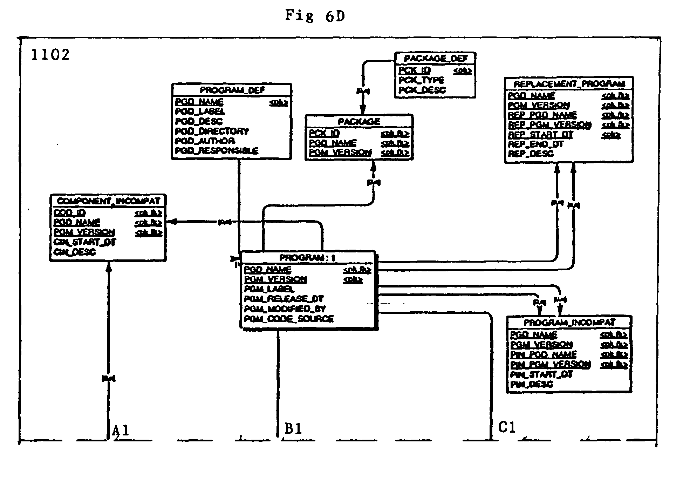

Ce premier ensemble de tableaux (1101) est lié à au moins un deuxième ensemble de tableaux (1102, fig. 5 et 6B et 6D) représentant les informations relatives aux constituants matériels et logiciels que l'on peut rencontrer sur un dispositif (100.1 à 100.n, fig. 1) de reproduction d'informations audiovisuelles. Ce ou ces deuxièmes tableaux (1102, fig. 5 et 6C et 6D) comprennent dans les tables (PROGRM_DEF, fig. 6D) de définition des programmes, notamment le nom (PGD_NAME, fig. 6D) ou dans les tables (COMPONENT, fig. 6A) de composant, (COMPONENT_DEF, fig. 6B) de définition des composants, (COMPONENT_UPGRADE, fig. 6B) de mise à jour de composants, (FIRMWARE, fig. 6B) de matériel, le nom (COD_ID, fig. 6B), la version (PGM_VERSION, fig. 6B) et la date d'installation (PGM_RELEASE_DT, fig. 6B) de chaque logiciel ou composant matériel. Chaque table des deuxièmes tableaux (1102, fig. 6B) correspond à un logiciel ou à un composant matériel. La liaison entre au moins une table d'un deuxième ensemble de tableaux (1102, fig. 6A) et le premier ensemble de tableaux (1101, fig. 5 et 6A) est réalisée par le numéro du dispositif (100.1 à 100.n, fig. 1) de reproduction d'informations audiovisuelles. Ainsi, grâce à cette liaison, il est possible de connaître tous les logiciels et composants matériels d'un dispositif (100.1 à 100.n, fig. 1) de reproduction d'informations audiovisuelles de numéro déterminé en recherchant dans chaque deuxième ensemble de tableaux les tables comprenant le numéro du dispositif (100.1 à 100.n, fig. 1) de reproduction d'informations audiovisuelles.

Le premier ensemble de tableaux (1101, fig. 5, 6A et 6C) est également lié à un troisième ensemble de tableaux (1103, JUKE_XX, lB_XXX, fig. 6A et 6C) représentant les informations relatives à la configuration d'un dispositif (100.1 à 100.n, fig. 1) de reproduction d'informations audiovisuelles. Un premier groupe de tables (IB_XXX) du troisième ensemble de tableaux (1103, fig. 6A) regroupe tous les paramètres de fonctionnement des dispositifs (100.1 à 100.n, fig. 1) de reproduction d'informations audiovisuelles et un deuxième groupe de tables (JUK_XXX) du troisième ensemble de tableaux (1103) associe chaque juke-box à un jeu déterminé de paramètres contenu dans une table du premier groupe de tables du troisième ensemble de tableaux (1103, IB_XXX). Par paramètres de fonctionnement, il faut comprendre aussi bien les paramètres concernant le volume de l'amplificateur définis pour un juke-box dans la table (JUK_MIXAGE, fig. 6A) ou encore ceux définis pour l'ensemble des juke-box dans la table (IB_MIXAGE, FIG. 6A), ou les paramètres sur le prix à acquitter (IB et JUK_TUNE_COST, fig. 6C) pour chaque sélection d'une chanson, ou encore les paramètres de la liaison de télécommunication (JUK_ISP, fig. 6C) avec le serveur (10, fig. 1), ou encore les paramètres de fonctionnement d'une éventuelle commande à distance d'un dispositif (100.1 à 100.n, fig. 1) de reproduction d'informations audiovisuelles. Ces paramètres sont définis pour un juke-box dans la table (JUK_REMOTE_CONTROL, fig. 6C) et tous les paramètres de fonctionnement des télécommandes de tous les juke-box sont définis par la table (IB_REMOTE_CONTROL, fig. 6C), un dispositif (100.1 à 100.n, fig. 1) de reproduction d'informations audiovisuelles étant associé à chaque fois à une table (JUK_TUNE_COST, lB_TUNE COST, JUK_REMOTE_CONTROL, lB_REMOTE_CONTROL, fig. 6C) des troisièmes ensembles de tableaux (1103). Chaque rangée d'une table mémorise les paramètres de fonctionnement d'un dispositif (100.1 à 100.n, fig. 1) de reproduction d'informations audiovisuelles de numéro déterminé (JUK_ID, fig. 6A). La liaison entre le premier et le troisième ensemble de tableaux (1103) s'effectue, par exemple, par le numéro d'identification d'un dispositif (100.1 à 100.n, fig. 1) de reproduction d'informations audiovisuelles. Ainsi, grâce à cette liaison, le serveur (10) connaît tous les paramètres de fonctionnement d'un dispositif (100.1 à 100.n, fig. 1) de reproduction d'informations audiovisuelles de numéro déterminé en recherchant dans chaque troisième ensemble de tableaux (1103) les tables comprenant le numéro (JUK_lD) du dispositif (100.1 à 100.n, fig. 1) de reproduction d'informations audiovisuelles déterminé, puis en recherchant dans les rangées de ces tables, le jeu de paramètres correspondant à la référence trouvée. De même, le serveur peut mettre à jour les informations contenues dans le troisième ensemble de tableaux (1103) lors de la réception d'un message d'un juke-box. Pour ce faire, dès qu'un juke-box établit une communication avec le serveur, celui-ci traite le message reçu pour déterminer si des informations contenues dans la base de données doivent être mises à jour. Si le message contient des informations relatives à des modifications des paramètres physiques, le serveur ajoute alors une nouvelle table ou remplace dans la rangée de la table concernée du troisième ensemble de tableaux (1103), la valeur fournie par les modifications.

Le premier ensemble de tableaux (1101, fig. 5 et 6A) est également lié à un quatrième ensemble de tableaux (1104, SONG, fig. 5 et 6A) représentant les informations relatives aux chansons mémorisées sur les dispositifs (100.1 à 100.n, fig. 1) de reproduction d'informations audiovisuelles. Chaque chanson est identifiée par un numéro unique (CLT_ID, fig. 6A). Chaque rangée d'une table du quatrième ensemble de tableaux (1104) représente une chanson mémorisée sur le dispositif (100.1 à 100.n, fig. 1) de reproduction d'informations audiovisuelles identifié par son numéro (JUK_ID, fig. 6A) en début de table. Le serveur peut mettre à jour les informations contenues dans le quatrième ensemble de tableaux (1104) lors de la réception d'un message d'un juke-box. Pour ce faire, dès qu'un juke-box établit une communication avec le serveur, celui-ci traite le message reçu pour déterminer si le message contient des informations spécifiques à la liste de chansons et décider si des informations contenues dans la base de données doivent être mises à jour. Si le message contient des informations relatives à des modifications de la liste des chansons contenues dans le juke-box, le serveur ajoute alors une nouvelle table si le juke-box n'était pas encore enregistré ou modifie dans la table correspondante au juke-box, la rangée correspondant aux modifications reçues, c'est-à-dire soit la suppression d'une ou plusieurs chansons, soit l'ajout d'une ou plusieurs nouvelles chansons dans la liste des chansons disponibles sur le juke-box.

Un cinquième ensemble de tableaux (1105, CATALOGUE, fig. 6B) lié au quatrième ensemble de tableaux (1104, SONG, fig. 6A), par l'intermédiaire du numéro d'identification de la chanson (CLT_lD, fig. 6A), comprend une description de chaque chanson de la base de données. Chaque table du cinquième ensemble de tableaux (1105, fig. 6B) représente la description d'une chanson de la base de données (11). Ce cinquième tableau (1105) permet notamment de déterminer si une chanson est disponible ou non pour être téléchargée sur un dispositif (100.1 à 100.n, fig. 1) de reproduction d'informations audiovisuelles à la demande d'un opérateur. En effet, une chanson n'est disponible notamment, que lorsque les accords relatifs à la copie de la chanson et à la reproduction de la chanson sont obtenus. Dans le cas contraire, la chanson est présente dans la base de données mais n'est pas disponible pour le téléchargement sur un juke-box. La liaison entre le premier (1101) et le quatrième (1104) ensembles de tableaux est réalisée par l'intermédiaire du numéro (JUKE_lD, fig. 6A) du dispositif (100.1 à 100.n, fig. 1) de reproduction d'informations audiovisuelles. Ainsi, le serveur peut déterminer dans un premier temps, le numéro (CTL_lD, fig. 6A) d'identification de toutes les chansons mémorisées dans un dispositif (100.1 à 100.n, fig. 1) de reproduction d'informations audiovisuelles de numéro déterminé. Puis, dans un deuxième temps, le serveur peut déterminer notamment le nom (CTL_SONG_NAME, fig. 6B) de toutes les chansons présentes sur le dispositif (100.1 à 100.n, fig. 1) de reproduction d'informations audiovisuelles déterminé par son numéro (JUK_ID), par l'intermédiaire de la liaison entre le quatrième (1104) et le cinquième (1105) ensemble de tableaux.

Le quatrième ensemble de tableaux (1104, fig. 5 et 6A) est également lié à un sixième ensemble de tableaux (1106, fig. 6B) représentant les informations relatives à des filtres permettant à un opérateur d'interdire le téléchargement d'une ou plusieurs chansons déterminées par des groupes de tables spécifiques. La détermination de la ou des chansons est réalisée par un premier groupe de tables spécifiques identifié par le numéro d'identification de la ou des chansons (FLT_CATALOGUE, fig. 5 et 6B), ou par un deuxième groupe de tables spécifiques identifié par le numéro d'identification de l'interprète de la ou les chansons (FLT_ARTIST, fig. 5 et 6B) ou un troisième groupe de tables spécifiques identifié par le numéro d'identification de la maison de disques de la ou des chansons (FLT_LABEL, fig. 5 et 6B) ou par un quatrième groupe de tables spécifiques identifié par le numéro d'identification de la catégorie (FLT_CATEGORY, fig. 6B) à laquelle appartient la ou les chansons. Chaque groupe de tables d'un sixième ensemble de tableaux (1106) représente un filtre déterminé, pour une chanson, un interprète, une maison de disque, ou une catégorie. Une des tables (JUK_FILTER, fig. 5 et 6B) du sixième ensemble de tableaux (1106) est également liée au premier ensemble de tableaux (1101) et comprend la description (JUK_DESC, fig. 6B) du filtre affecté à chaque juke-box par le numéro d'identification du filtre (JUF_ID) qui est associé dans chaque table (JUKEBOX, 1101) avec l'identifiant du juke-box donné (JUK_ID). Le premier tableau (1101) comprend également un argument correspondant au numéro du filtre (JUF_lD). Ainsi, le filtre d'un juke-box déterminé est défini en recherchant dans le sixième ensemble de tableaux, (1106) la ou les tables comprenant le numéro (JUF_ID) du filtre. De même, il est possible, pour un opérateur ,d'affecter un même numéro de filtre à un ou plusieurs systèmes (100.1 à 100.n, fig. 1) de reproduction d'informations audiovisuelles.

Le premier tableau (1101, fig. 5 et 6A) est également lié à un septième tableau (1107, fig. 6A) représentant les informations relatives aux opérateurs des dispositifs (100.1 à 100.n, fig. 1) de reproduction d'informations audiovisuelles. Ces informations comprennent dans des tables (OPERATOR, fig. 6A) notamment un identifiant de l'opérateur (OPE_ID, fig. 6A). Chaque table du huitième ensemble de tableaux (1108) correspond à un opérateur déterminé. La liaison entre le premier (1101) et le huitième ensembles de tableaux (1108) est réalisée par l'intermédiaire de l'identifiant de l'opérateur, à travers des tables (JUKEBOX_LOCATION, fig. 6A) qui contiennent l'association (OPE_ID, JUK_lD, fig. 6A) permettant ainsi de remonter au dispositif. Ainsi, cette liaison permet notamment de déterminer pour un numéro d'opérateur déterminé quels sont les numéros de dispositif (100.1 à 100.n, fig. 1) de reproduction d'informations audiovisuelles dont l'opérateur a la gestion.

Le premier ensemble de tableaux (1101, fig. 6A) est également lié à un huitième ensemble de tableaux (1108, fig. 6A et 6E) représentant les informations relatives au journal de bord d'un dispositif (100.1 à 100.n, fig. 1) de reproduction d'informations audiovisuelles. Ces informations représentent, en fait, tous les événements qui interviennent sur chaque dispositif (100.1 à 100.n, fig. 1) de reproduction d'informations audiovisuelles et en particulier, toutes les fois qu'une chanson est jouée, une information est inscrite dans le juke-box puis, à intervalles réguliers, chaque juke-box se met en relation avec le serveur (10) pour remplir une table d'un huitième ensemble de tableaux (1108, PLAY_LOG, fig. 6A). De même, chaque fois qu'une somme d'argent est introduite dans le dispositif (100.1 à 100.n, fig. 1) de reproduction d'informations audiovisuelles, une nouvelle information est inscrite dans le juke-box et l'ensemble de ces informations est reçu dans un autre tableau (SYSTEM_LOG, fig. 6A) de la base de données (11) du serveur (10) appartenant au huitième ensemble de tableaux. Les informations recueillies dans ces tableaux permettent, notamment, de calculer les redevances qui doivent être réglées à l'artiste des chansons, mais également de connaître exactement quelles sont les chansons qui ont été jouées dans une journée, une semaine, ou une période déterminée, sur un dispositif (100.1 à 100.n, fig. 1) de reproduction d'informations audiovisuelles déterminé. Les informations relatives aux calculs des redevances sont, par exemple, centralisées dans un neuvième ensemble de tableaux (1109), lié au huitième ensemble de tableaux (1108).

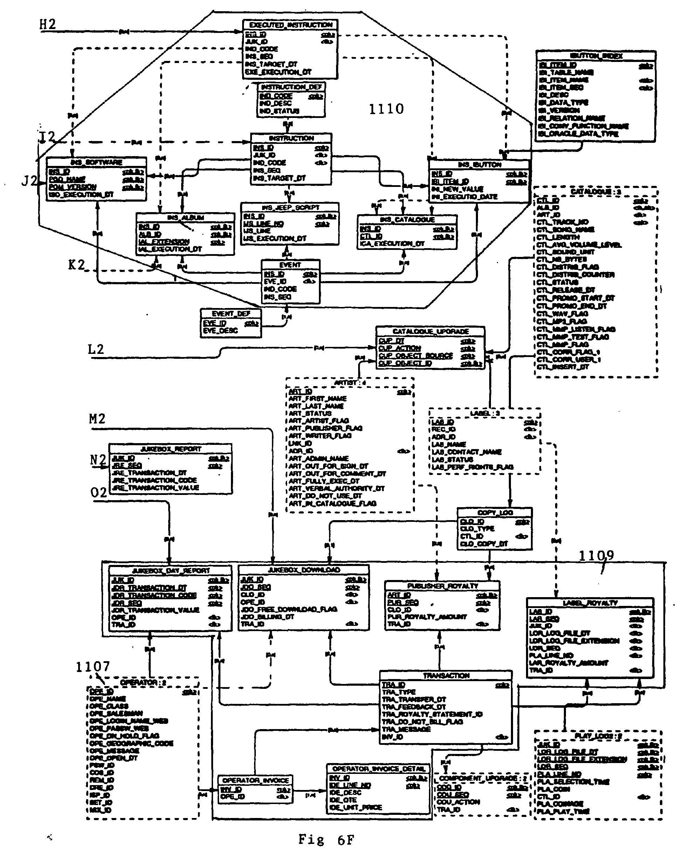

Le premier ensemble de tableaux (1101, fig. 5 et 6A) est également lié à un dixième ensemble de tableaux (1110, fig. 6F) représentant les informations relatives aux instructions qui devront être transmises à au moins un dispositif (100.1 à 100.n, fig. 1) de reproduction d'informations audiovisuelles déterminé. Au moins une table (INSTRUCTION_DEF, fig. 6F) du dixième ensemble de tableaux (1110, fig. 6F) comprend une description des instructions. De même, la liaison entre le premier ensemble de tableaux (1101) et le dixième ensemble de tableaux (1110, fig. 6F) est réalisée par l'intermédiaire du numéro d'identification du dispositif (100.1 à 100.n, fig. 1) de reproduction d'informations audiovisuelles. Ainsi, il est possible de collecter toutes les instructions destinées à un dispositif (100.1 à 100.n, fig. 1) de reproduction d'informations audiovisuelles déterminé. Ces instructions peuvent être, par exemple, une mise à jour d'au moins un logiciel (INS_SOFTWARE, fig. 6F) installé sur le dispositif (100.1 à 100.n, fig. 1) de reproduction d'informations audiovisuelles, un téléchargement de nouvelles chansons (INS CATALOGUE, INS_ALBUM, fig. 6F) commandées par l'opérateur du dispositif (100.1 à 100.n, fig. 1) de reproduction d'informations audiovisuelles, une modification des paramètres de fonctionnement (INS_IBUTTON, fig. 6F) du dispositif (100.1 à 100.n, fig. 1) de reproduction d'informations audiovisuelles. Ce dixième ensemble de tableaux (1110) est consulté systématiquement par le serveur (10) lorsqu'un dispositif (100.1 à 100.n, fig. 1) de reproduction d'informations audiovisuelles établit une communication avec le serveur (10), de façon à vérifier que des instructions mémorisées dans les onzièmes tableaux (1111) sont destinées ou non au dispositif (100.1 à 100.n, fig. 1) de reproduction d'informations audiovisuelles qui vient d'établir la communication avec le serveur (10).

Revenons à la figure 1, selon l'invention, le serveur comprend également un gestionnaire (12) de site " Internet". Le site " Internet " permet de construire une pluralité d'écrans utilisant les informations de la base de données pour permettre à un opérateur, par l'intermédiaire d'un ordinateur (20), par exemple, personnel de type PC, disposant d'un modem (21) et d'une connexion à " Internet " d'accéder aux fonctionnalités proposées par ces écrans. Les différents écrans permettent, notamment, premièrement de consulter les informations stockées dans la base de données (11) et relatives au fonctionnement d'au moins un dispositif (100.1 à 100.n) de reproduction d'informations audiovisuelles, deuxièmement de modifier certains paramètres de configuration (en anglais " settings ") d'au moins un dispositif (100.1 à 100.n) de reproduction d'informations audiovisuelles, troisièmement de réaliser une modification de la liste des chansons d'au moins un dispositif (100.1 à 100.n) de reproduction d'informations audiovisuelles.

Pour ce faire, le gestionnaire (12) du site " Internet " communique, par l'intermédiaire de requêtes, avec la base (11) de données, de sorte que les informations affichées sur les écrans correspondent aux informations de la base (11) de données. D'autre part, les requêtes envoyées par le gestionnaire (12) du site peuvent être destinées à modifier les informations de la base (11) de données. Les requêtes utilisées sont, par exemple, dans le langage SQL.

Le fonctionnement du gestionnaire (12) du site "Internet" est le suivant. Le gestionnaire (12) communique suivant le protocole de communication TCP/IP propre à Internet avec un serveur (14) de fournisseur d'accès Internet (en anglais " Internet service provider "), par l'intermédiaire de moyens de communication tels que des modems (121, 141) reliés au réseau téléphonique. Le serveur (14) du fournisseur d'accès permet à un opérateur de visualiser sur le moniteur de son ordinateur (20) les écrans construits par le gestionnaire (12) du site en relayant une requête vers le gestionnaire (12) via le serveur (14) du fournisseur d'accès, qui répond en envoyant les informations nécessaires pour permettre l'affichage de l'écran ou de l'information demandée par l'opérateur. Les requêtes de demandes d'informations de l'opérateur sont donc, dans un premier temps, transmises vers le serveur (14) du fournisseur d'accès, puis l'envoi vers le gestionnaire (12) du site du serveur (10) central.

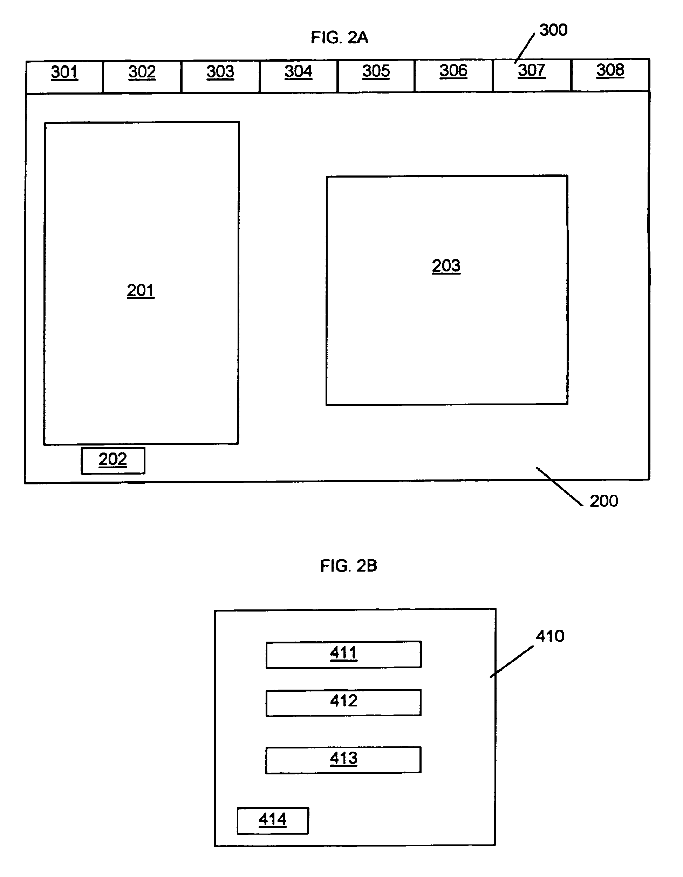

Dès que l'opérateur a accédé au site " Internet ", par l'intermédiaire, d'une requête envoyée vers le serveur (14) du fournisseur d'accès, un premier écran (200), représenté figure 2A, est affiché sur le moniteur de l'ordinateur (20) de l'opérateur. L'affichage de cet écran (200) est précédé par une requête émise par le gestionnaire (12) du site vers la base de données (11). Cette requête comprend une demande des numéros d'identification de tous les systèmes (100.1 à 100.n) de reproduction d'informations audiovisuelles gérés par le serveur (10). La base de données (11) traite cette requête en retournant la liste de tous les numéros d'identification demandés. Ce traitement consiste à rechercher dans le premier ensemble de tableaux (1101), les numéros d'identifiant des dispositifs (100.1 à 100.n) de reproduction d'informations audiovisuelles dont l'identifiant de l'opérateur propriétaire ou locataire des dispositifs (100.1 à 100.n) de reproduction d'informations audiovisuelles correspond à celui de l'opérateur qui émet la requête. Le gestionnaire (12) construit alors le premier écran (200) en affichant la liste fournie par la base de données (11) dans une première fenêtre (201), par exemple, déroulante. De même, une deuxième fenêtre (203) peut être utilisée pour afficher un message d'accueil et/ou des informations relatives à l'opérateur telles que son adresse, et le nombre total de juke-box qu'il gère. Ensuite, les informations relatives à l'affichage de l'écran (200) sont transmises vers le serveur (14) du fournisseur d'accès qui les transmet vers l'ordinateur (20) de l'opérateur. Les transferts de données entre le serveur central (10) et le serveur (14) du fournisseur d'accès, et entre le serveur (14) du fournisseur d'accès et l'ordinateur (20) de l'opérateur sont réalisés, par exemple, via les modems (121, 141, 21) des serveurs (10, 14) et de l'ordinateur (20). Les informations reçues par l'ordinateur (20) permettent alors l'affichage de l'écran demandé.

Par la suite, tous les opérations de sélection ou de saisie réalisées sur les écrans et affichées sur le moniteur de l'ordinateur (20) de l'opérateur sont traduites en requêtes selon le protocole HTTP via le réseau TCP/IP vers le serveur (14) du fournisseur d'accès, puis vers le gestionnaire (12) du site. Le gestionnaire (12) réalise le traitement de cette requête en émettant éventuellement une ou plusieurs requêtes vers la base (11) de données, par exemple, en langage SQL, pour construire un écran représentatif de la réponse à la requête reçue. Cet écran est ensuite retourné vers le moniteur de l'ordinateur (20) de l'opérateur via le réseau téléphonique (30) et le serveur (14) du fournisseur d'accès, selon le protocole HTTP.

L'affichage du premier écran (200) peut être précédé par l'affichage d'un écran, représenté figure 2B, permettant d'authentifier l'opérateur et de limiter l'accès de l'opérateur. Cet écran (410) comprend au moins une zone (411 à 413) de saisie permettant à l'opérateur de saisir un mot de passe (412) et/ou un nom d'utilisateur (411). Cet écran (410) comprend également une zone (414) de sélection qui déclenche l'envoi d'une requête d'identification comportant les éléments saisis par l'opérateur vers le gestionnaire (12) du site. Le gestionnaire (12) du site traite cette requête, premièrement en vérifiant l'authenticité des éléments saisis par l'opérateur par l'intermédiaire d'une comparaison entre les éléments saisis et des valeurs mémorisées. Cette vérification s'effectue, par exemple, par une consultation d'une sélection des informations contenues dans le septième tableau (1107, fig. 6A) et relative à l'opérateur, locataire ou propriétaire des dispositifs (100.1 à 100.n, fig. 1) de reproduction d'informations audiovisuelles. Deuxièmement, le gestionnaire (12) du site émet une requête vers la base (11) de données contenant l'identification de l'opérateur de sorte que la base (11) de données collecte uniquement le numéro des dispositifs (100.1 à 100.n, fig. 1) de reproduction d'informations audiovisuelles gérés par l'opérateur identifié.

L'opérateur choisit dans la fenêtre (201) du premier écran (200), par exemple, en sélectionnant à l'aide d'un pointeur, tel qu'une souris ou son doigt sur un écran tactile, le ou les numéros des dispositifs (100.1 à 100.n, fig. 1) de reproduction d'informations audiovisuelles dont il veut consulter ou modifier la configuration. Une fois la sélection réalisée, l'opérateur valide la sélection soit en sélectionnant une première zone (202) de sélection du premier écran (200), soit en double cliquant sur le numéro du juke-box désiré.

Le premier écran (200) ainsi que tous les autres écrans affichés par le gestionnaire (12) du site « Internet » comprend, par exemple, dans la partie supérieure une barre (300) d'outils. Cette barre (300) d'outils comprend une pluralité de boutons (301 à 308) de sélection permettant, lorsqu'il sont sélectionnés, de déclencher l'affichage d'un écran spécifique dédié à la réalisation des fonctions d'administration des juke-box décrit précédemment, ou déclenche la validation des opérations effectuées sur l'écran en cours. Il faut noter que l'affichage des écrans spécifiques est effectué en fonction du ou des juke-box sélectionnés par l'opérateur dans la première fenêtre (201) du premier écran (200).

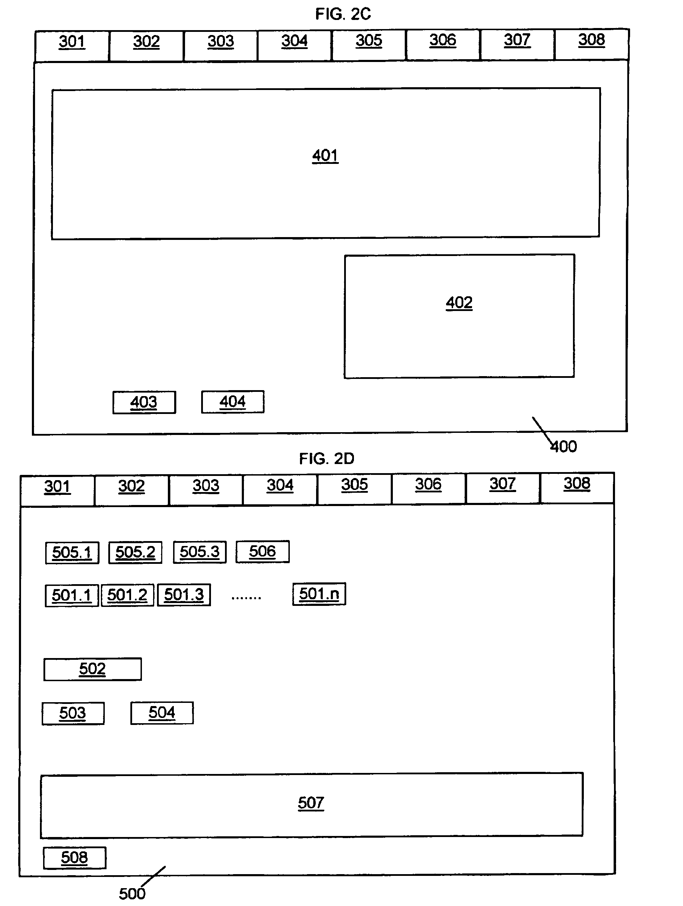

Ainsi chaque bouton de sélection (301 à 308) de la barre (300) d'outils déclenche l'émission d'une requête distincte vers le gestionnaire (12) du site puis du gestionnaire du site (12) vers la base (11) de données. La requête émise lors de la sélection du premier bouton (301) de sélection est traitée par la base (11) de données pour collecter les paramètres du dispositif (100.1 à 100.n) de reproduction d'informations audiovisuelles sélectionnées concernant l'implantation du juke-box sélectionné. Ces informations sont ensuite affichées dans un troisième écran (400) représenté figure 2C. Une première fenêtre (401) de cet écran (400) comprend notamment le lieu d'implantation du juke-box, le nom du responsable du juke-box et le ou les genres de musique exécutée sur le juke-box. Par genre de musique, il faut comprendre, par exemple, du « rock », de la « country', du « rythm & blues », des musiques latines, du « jazz », de l'« alternatif », ou des musiques relatives à des événements saisonniers (par exemple, des chants de Noël). Une deuxième fenêtre (402) du troisième écran (400) permet de corriger ou de modifier le lieu d'implantation ou le nom du responsable. Deux zones de sélection (403, 404) permettent ensuite de valider (403) ou ignorer (404) les modifications réalisées. La sélection de la zone de validation (403) provoque l'émission par le gestionnaire (12) du site d'une requête vers la base (11) de données. Cette requête est une requête de modification destinée à mettre à jour les données de la base (11) de données en fonction des saisies réalisées par l'opérateur sur le troisième écran (400). La réception de cette requête par la base (12) de données provoque également la création d'un fichier par la base (11) de données contenant les informations de mise à jour.

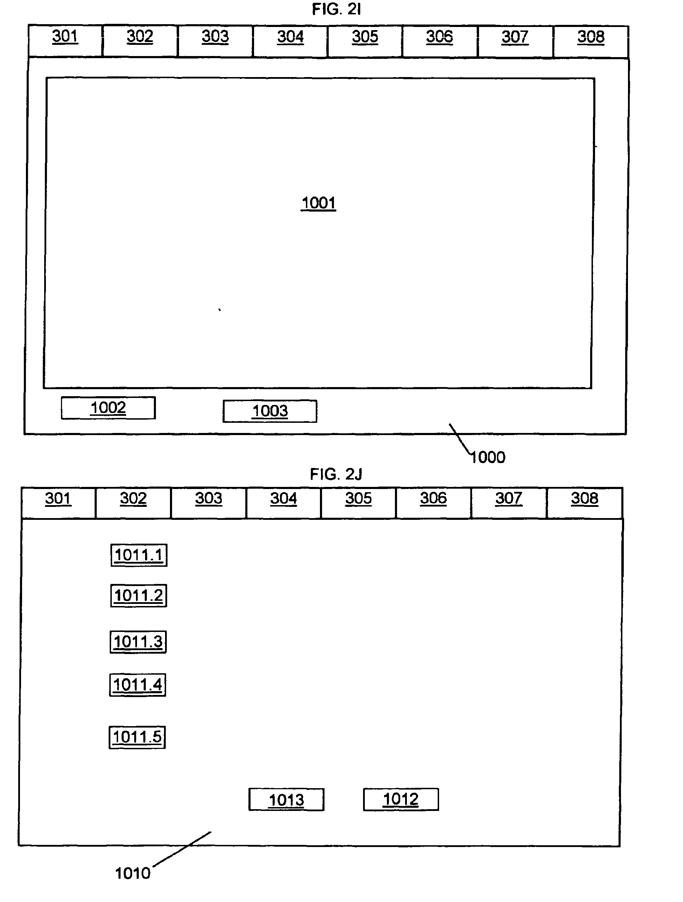

La sélection d'un deuxième bouton (302) de la barre d'outils (300) déclenche l'affichage, par le gestionnaire (12) du site, d'une série d'écrans permettant à l'opérateur de choisir au moins une chanson qui sera téléchargée sur le dispositif (100.1 à 100.n, fig. 1) de reproduction d'informations audiovisuelles de son choix. Cette série d'écrans comprend un quatrième écran (500), représenté figure 2D, et permettant à l'opérateur de définir un genre de chanson. La sélection de la catégorie de chanson est réalisée en sélectionnant, par exemple avec un pointeur, une ou plusieurs premières zones (501.1 à 501.n) correspondant chacune au choix d'un genre de chansons. Le quatrième écran peut comprendre une pluralité de deuxièmes zones (505.1 à 505.3) définissant chacune le critère de tri des chansons correspondant au genre choisi. Le tri peut être réalisé, par exemple, par auteur (505.1), par album (505.2) ou par le nom des chansons (505.3). De même, une troisième zone (506) peut permettre de n'afficher que les chansons qui ont récemment été introduites dans la base de données et qui répondent en plus à d'autres critères de choix. Dans une autre variante, une quatrième zone (502) permet de choisir, sélectionner ou saisir un ou plusieurs mots qui seront utilisés pour explorer la base de données de chansons et pour sélectionner les chansons dans lesquelles le ou les mots sont compris, soit dans le titre soit dans le nom de l'artiste, soit dans le titre d'un album.

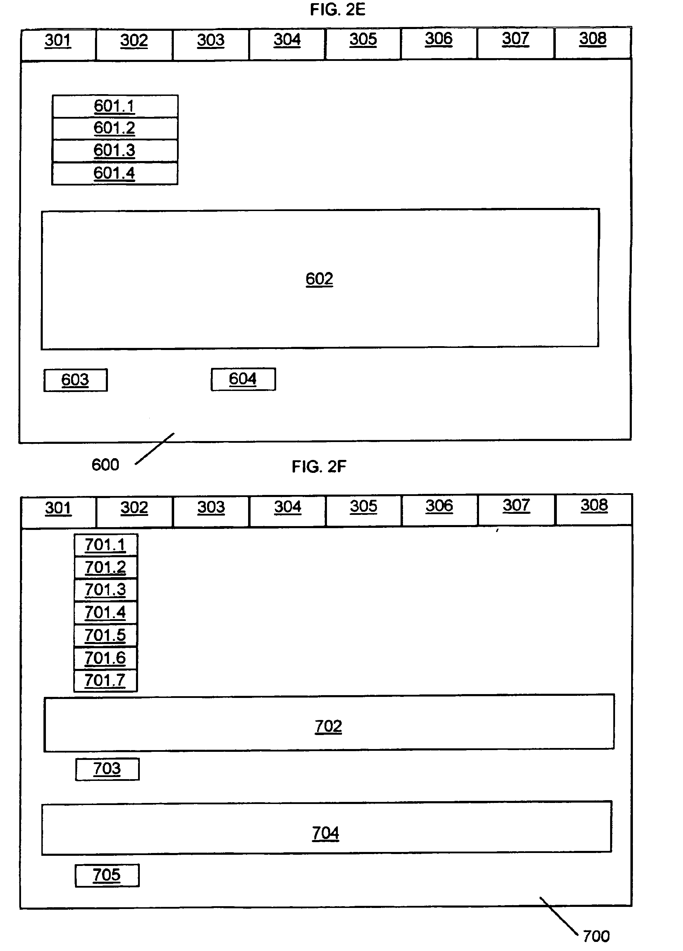

Le quatrième écran (500) comprend également une zone de sélection (503, respectivement 504) déclenchant la validation, (respectivement l'annulation) des choix réalisés par l'opérateur et provoque l'envoi d'une requête par le gestionnaire (12) du site vers la base (11) de données. Cette requête est traitée par la base (11) de données pour collecter les noms de toutes les chansons disponibles dans la base de données et correspondant aux critères de choix définis précédemment par l'opérateur. Les chansons disponibles sont notamment déterminées par une consultation des tables du cinquième ensemble de tableaux (1105, fig. 5). La liste des noms de chansons ainsi collectées est transmise au gestionnaire (12) du site qui génère dans une fenêtre (507) déroulante la liste des chansons disponibles dans la base (11) de données, c'est-à-dire des chansons susceptibles d'être téléchargées ultérieurement sur le dispositif (100.1 à 100.n) de reproduction d'informations audiovisuelles et répondant au critère de sélection choisi par l'opérateur. Pour chaque chanson, les données affichées sont, par exemple, le titre de la chanson, le nom de l'interprète, le titre de l'album dont est extraite la chanson, et/ou un numéro d'identification de la chanson. La sélection d'une chanson dans la liste de la première fenêtre s'effectue en pointant, par exemple, le nom de la chanson souhaitée pour, par exemple, le mettre en surbrillance, la validation du choix de la chanson mise en surbrillance est réalisée en pointant une première zone de sélection (508). La sélection de cette première zone (508) de sélection déclenche une procédure du gestionnaire (12) du site qui provoque, par exemple, l'affichage d'un cinquième écran (600), représenté figure 2E, et destiné à confirmer le choix de chansons sélectionnées. Ce cinquième écran (600) comprend, par exemple, une pluralité de champs (601.1 à 601.4) visualisant le titre (601.1) de la chanson choisie, le titre (601.2) de l'album, le nom (601.3) de l'interprète et le genre (601.4) de musique auquel appartient la chanson. Une première fenêtre (602) déroulante comprend la liste des juke-box appartenant à l'opérateur. Cette fenêtre (602) permet de choisir les juke-box sur lesquels la chanson identifiée par les champs (601.1 à 604.4) sera téléchargée. La sélection des juke-box s'effectue en pointant dans la première fenêtre (602), par exemple, le numéro des juke-box souhaités par l'opérateur. La sélection d'une première zone (603) de sélection permet de valider le choix des juke-box et une deuxième zone de sélection permet d'afficher à nouveau le quatrième écran pour sélectionner une nouvelle chanson.

Dans une autre variante, la requête envoyée à la base de données (11), lors de la validation du choix de l'opérateur est traitée par la base de données pour collecter les noms des chansons les plus jouées sur les autres juke-box de l'opérateur et/ou sur l'ensemble des juke-box gérés par le serveur. La sélection des noms de chansons est également réalisée en respectant les critères choisis ou sélectionnés par l'opérateur.

Un programme de traitement de statistiques d'exécution des oeuvres audio ou vidéo permet, après traitement des informations de la base de données (11) représentatives du nombre d'exécution de chaque chanson de déterminer un classement, indépendamment du type ou de la catégorie d'établissement ou prenant en compte le type d'établissement pour ensuite proposer à un opérateur d'une catégorie d'établissement similaire une liste définie en fonction du classement. Ainsi, un opérateur d'un établissement appartenant à une catégorie d'établissements déterminée peut demander l'affichage sur son terminal de la liste des chansons les plus jouées sur l'ensemble des juke-box installés dans les établissements appartenant à la catégorie déterminée. A titre d'exemple non limitatif, le programme réalisant cette sélection de chansons est un outil de recommandation produit par la société Net Perception.

La sélection de la première zone (603) de sélection déclenche la validation de l'achat de la chanson affichée dans les champs (601. 1 à 601.4) pour tous les juke-box mis en surbrillance dans la première fenêtre (602) déroulante et provoque l'envoi, par le gestionnaire (12), d'une requête vers la base (11) de données. Le traitement de cette requête provoque la création d'un fichier contenant les informations audiovisuelles nécessaires pour la reproduction des chansons sélectionnées par l'opérateur sur les dispositifs (100.1 à 100.n, fig. 1) de reproduction d'informations audiovisuelles choisis par le même opérateur. Ce fichier ou les informations qu'il contient, sont mémorisés et destinés à être téléchargés sur le dispositif (100.1 à 100.n, fig. 1) de reproduction d'informations audiovisuelles concerné par la mise à jour dès que ce dernier établira une communication téléphonique avec le serveur central (10, fig. 1). Le téléchargement de ce fichier ou des informations sur les dispositifs (100.1 à 100.n, fig. 1) de reproduction d'informations audiovisuelles provoque la mise à jour de la liste des chansons disponibles sur les dispositifs (100.1 à 100.n, fig. 1) de reproduction d'informations audiovisuelles et autorise également la reproduction sur ces dispositifs (100.1 à 100.n, fig. 1) de reproduction d'informations audiovisuelles des chansons correspondant aux informations audiovisuelles contenues dans le fichier. Les informations correspondant à ce fichier sont, par exemple, contenues dans l'une des tables du dixième ensemble de tableaux (1110, fig. 6C) de la base de données (11). Lors de la prochaine communication du dispositif (100.1 à 100.n, fig. 1) de reproduction d'informations audiovisuelles avec le serveur (11), ce dernier vérifie dans les tables du dixième ensemble de tableaux (1110, fig. 6C), si des instructions sont destinées au dispositif (100.1 à 100.n, fig. 1) de reproduction d'informations audiovisuelles concerné. Si tel est le cas, le serveur (10) construit un fichier de commandes à partir des informations contenues dans la table du dixième ensemble de tableaux (1110, fig. 6C) correspondante associée au juke-box, puis le serveur (10) télécharge ce fichier vers le dispositif (100.1 à 100.n, fig. 1) de reproduction d'informations audiovisuelles.

Dans une autre variante de réalisation de l'invention, les chansons commandées par l'opérateur ne sont pas directement téléchargées vers le ou les systèmes (100.1 à 100.n, fig. 1) de reproduction d'informations audiovisuelles choisis par l'opérateur, mais sont mémorisées sur un support optique enregistrable tel qu'un CD-ROM. Le CD-ROM est alors gravé avec les informations audiovisuelles correspondantes aux chansons choisies par l'opérateur. Pour ce faire, le système, selon l'invention, comprend un système (non représenté) de gravure de CD-ROM. Une fois le CD-ROM gravé, celui-ci est alors envoyé, par exemple par courrier, à l'opérateur qui peut l'utiliser pour mettre à jour les moyens de mémorisation des dispositifs (100.1 à 100.n, fig. 1) de reproduction d'informations audiovisuelles qu'il gère. Afin de limiter le nombre de copies du CD-ROM, les informations gravées comprennent le numéro d'identification des dispositifs (100.1 à 100.n, fig. 1) de reproduction d'informations audiovisuelles sur lequel la copie est autorisée. L'utilisation du CD-ROM nécessite la mise en place sur chaque dispositif (100.1 à 100.n, fig. 1) de reproduction d'informations audiovisuelles d'un lecteur de CD-ROM. Lors de l'opération de copie des informations contenues sur le CD-ROM le système d'exploitation du dispositif (100.1 à 100.n, fig. 1) de reproduction d'informations audiovisuelles compare les numéros d'identification contenus sur le CD-ROM et le numéro d'identification du dispositif (100.1 à 100.n, fig. 1) de reproduction d'informations audiovisuelles. Si l'un des numéros correspond, la copie est réalisée. Dans le cas contraire, la copie est refusée et le dispositif (100.1 à 100.n, fig. 1) de reproduction d'informations audiovisuelles peut, par exemple, se mettre hors service et établir une communication avec le serveur (10) pour rendre compte du problème. Le choix entre le téléchargement des chansons ou l'enregistrement des chansons sur un CD-ROM est effectué par la sélection d'une quatrième zone de sélection (non représentée) du septième écran ou par l'affichage d'un écran spécifique (non représenté) lorsque l'opérateur a validé son choix de chansons. Cet écran comprend alors au moins une zone de sélection permettant de choisir entre le téléchargement ou la copie sur CD-ROM. Dans tous les cas, les chansons sont compressées au format MPEG et cryptées et restent cryptées jusqu'au moment de leur exécution sur un dispositif de reproduction d'informations audiovisuelles.

La copie sur CD-ROM se révèle particulièrement utile lorsque l'opérateur désire acheter un grand nombre de chansons et qu'il veut copier ces chansons sur plusieurs systèmes (100.1 à 100.n, fig. 1) de reproduction d'informations audiovisuelles. En effet, le téléchargement d'une grande quantité d'informations peut s'avérer très long et donc coûteux en terme de communication téléphonique. De plus, lorsque la communication est longue, le risque qu' elle soit interrompue est accru et par conséquent il est nécessaire de recommencer tout ou partie du téléchargement. Un tel procédé peut également s'appliquer pour des particuliers jouant le rôle d'opérateur et commandant soit par téléchargement, soit par CD ROM gravés, une sélection d'oeuvres audiovisuelles qui reste cryptée en fonction d'un identifiant du particulier associé au matériel de reproduction et qui ne peut être exécutée et décryptée au moment de l'exécution que sur des dispositifs domestiques tels que ceux décrits dans la demande de brevet internationale WO 96/12259, déposée par la requérante et comportant des moyens de décryptage utilisant un identifiant mémorisé sur le dispositif domestique ou dans un dispositif associé pour décrypter les oeuvres.

Le CD-ROM peut être remplacé par tout support d'enregistrement magnétique ou optique portable de capacité équivalente ou supérieure comme par exemple, une mémoire électronique à l'état solide, par exemple à semi-conducteur.

De même, selon le procédé décrit précédemment, avant l'installation d'un nouveau juke-box, l'opérateur peut créer à l'avance un disque dur sur lequel sera enregistrée une liste de chansons souhaitées et choisies par l'opérateur. Lors de l'installation du juke-box, le disque dur contenant l'ensemble des chansons choisies sera installé sur le juke-box pour constituer les moyens de mémorisation de masse du juke-box ainsi que la liste de chansons disponibles sur ce juke-box.

La sélection d'un troisième bouton (303) de la barre d'outils (300) provoque l'envoi d'une requête vers le gestionnaire (12) du site « Internet ». La requête émise lors de la sélection du troisième bouton (303) de sélection est traitée par la base (11) de données pour collecter les paramètres du dispositif (100.1 à 100.n, fig. 1) de reproduction d'informations audiovisuelles sélectionnées concernant des informations relatives à l'utilisation du juke-box choisi par l'opérateur. Ces informations sont affichées dans une série de champs (701.1 à 701.7) d'un sixième écran (700) représenté figure 2F. A titre d'exemple, un premier champ (701.1) indique la date du dernier appel du juke-box. Un deuxième champ (701.2) indique le statut d'exécution du dernier appel du juke-box, c'est-à-dire si l'appel a été ou non correctement exécuté. Un troisième champ (701.3) indique, s'il y a lieu, l'état de fonctionnement du monnayeur du juke-box. Un quatrième champ (701.4) indique le taux de rejet du monnayeur. Un cinquième champ (701.5) indique, s'il y a lieu, l'état de fonctionnement d'un accepteur de billets du juke-box. Un sixième champ (701.6) indique le taux de rejet de l'accepteur de billets. Un septième (701.7) champ indique la date de la dernière opération de maintenance ou de mise à jour du juke-box.

Une première fenêtre déroulante (702) du sixième écran permet d'afficher la liste des chansons qui doivent être téléchargées sur le juke-box. La sélection d'une première zone de sélection (703) permet de supprimer de la liste une ou plusieurs chansons qui ont été préalablement pointées par l'opérateur. Une deuxième fenêtre déroulante (704) du sixième écran permet d'afficher la liste des chansons qui doivent être supprimées de la liste des chansons disponibles sur le juke-box. La sélection d'une deuxième zone de sélection (705) permet d'annuler l'opération de suppression d'une ou plusieurs chansons qui ont été préalablement pointées par l'opérateur. L'ensemble des informations permettant de générer les listes de chansons affichées dans les première et deuxième fenêtres (702, 704) déroulantes du sixième écran (700) est collecté par le gestionnaire (12) du site «Internet» dans la base de données (11) du serveur (10).

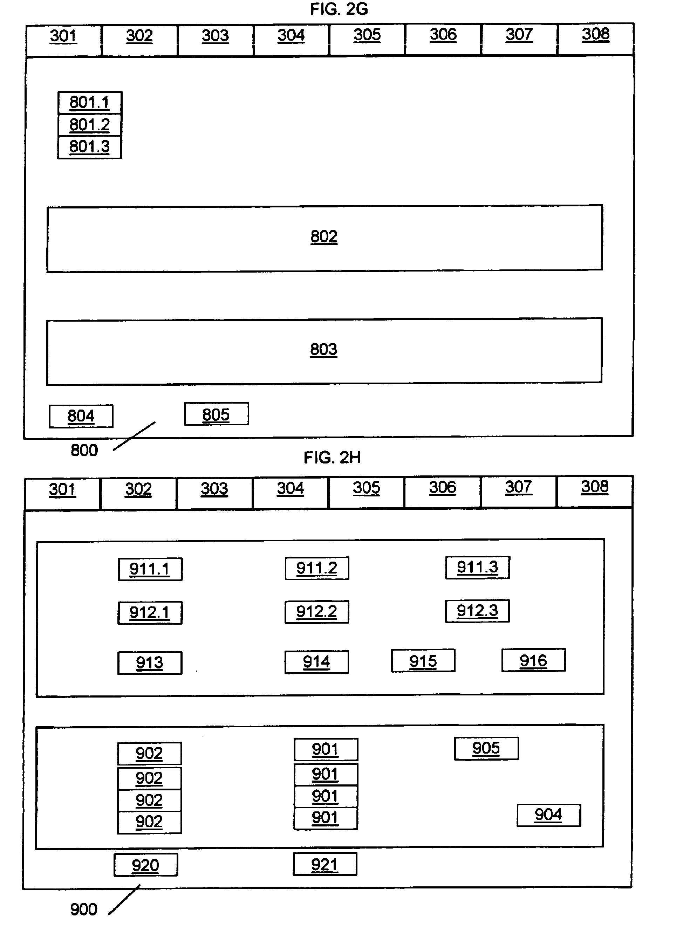

Le gestionnaire (12) du site " Internet " permet également de visualiser des informations relatives à des statistiques d'utilisation d'un dispositif (100.1 à 100.n, fig. 1) de reproduction d'informations audiovisuelles. Cette visualisation est déclenchée, par exemple, par la sélection d'un quatrième bouton (304) de la barre d'outils (300). La sélection d'un quatrième bouton (304) provoque l'envoi par le gestionnaire (12) du site d'une requête vers la base de données. Cette requête est une requête d'interrogation de la base (11) de données sur les informations relatives aux statistiques d'utilisation. Le traitement de cette requête par la base (11) de données consiste à collecter les informations du type correspondant à la zone sélectionnée. Les informations collectées sont affichées dans un septième écran (800), représenté figure 2G comportant une pluralité de champs (801.1 à 801.3) correspondant chacun à un type d'informations. A titre non limitatif, un premier champ (801.1) correspond, par exemple, à la date de la dernière initialisation du monnayeur et/ou de l'accepteur de billets du juke-box. Un deuxième champ (801.2) correspond à la somme d'argent introduite dans le juke-box depuis la dernière initialisation. Un troisième champ (801.3) correspond à la somme introduite dans le juke-box pour la semaine en cours. La liste, par exemple, des 100 chansons les plus jouées sur le juke-box est affichée dans une première fenêtre (802) déroulante du septième écran (800). La liste, par exemple, des 100 chansons les moins jouées sur le juke-box est affichée dans une deuxième fenêtre (803) déroulante. Une première zone (804) de sélection permet de valider la suppression des chansons préalablement pointées dans la deuxième fenêtre (803). Une deuxième zone (805) permet à l'opérateur d'annuler les choix des chansons à supprimer qu'il a réalisés. La sélection de la première zone (804) déclenche la validation de tous les choix réalisés par l'opérateur pour la suppression des chansons et provoque l'émission par le gestionnaire (12) du site d'une requête vers la base (11) de données. Cette requête est une requête de modifications destinée à mettre à jour les données de la base (11) en fonction des choix réalisés par l'opérateur sur le septième écran (800). La réception de cette requête par la base (12) de données provoque également la création d'un fichier par la base (11) de données contenant les informations de mise à jour. Ce fichier ou les informations contenues dans ce fichier sont mémorisés et destinés à être téléchargés sur le dispositif (100.1 à 100.n, fig. 1) de reproduction d'informations audiovisuelles concerné par la mise à jour dès que ce dernier établira une communication téléphonique avec le serveur central (10). Le téléchargement de ce fichier ou de ces informations sur le dispositif (100.1 à 100.n, fig. 1) de reproduction d'informations audiovisuelles provoque la mise à jour de la liste des chansons disponibles sur le dispositif (100.1 à 100.n, fig. 1) de reproduction d'informations audiovisuelles concerné conformément au choix de l'opérateur. Les informations correspondant à ce fichier, sont par exemple, contenues dans une des tables du quatrième ensemble de tableaux (1110, fig. 6C) de la base de données (11). Lors de la prochaine communication du dispositif (100.1 à 100.n, fig. 1) de reproduction d'informations audiovisuelles concerné avec le serveur (10), ce dernier vérifie dans les tables du dixième ensemble de tableaux (1111, fig. 6C), si des instructions sont destinées au dispositif (100.1 à 100.n, fig. 1) de reproduction d'informations audiovisuelles concerné. Si tel est le cas, le serveur (10) construit un fichier de commandes à partir des informations contenues dans la table du dixième ensemble de tableaux (1110, fig. 6C) correspondant, puis le serveur (10) télécharge ce fichier vers le dispositif (100.1 à 100.n, fig. 1) de reproduction d'informations audiovisuelles.

Les chansons devant être supprimées sont effacées des moyens de mémorisation du dispositif (100.1 à 100.n, fig. 1) de reproduction d'informations audiovisuelles.

La requête émise lors de la sélection du cinquième bouton (305) de la barre d'outils (300) sélection est traitée par la base (11) de données pour collecter les paramètres du dispositif (100.1 à 100.n, fig. 1) de reproduction d'informations audiovisuelles sélectionnées concernant la somme d'argent à acquitter par l'utilisateur du dispositif (100.1 à 100.n, fig. 1) de reproduction d'informations audiovisuelles, pour pouvoir sélectionner au moins une chanson sur le dispositif (100.1 à 100.n, fig. 1) de reproduction d'informations audiovisuelles. De même, la collecte peut concerner les paramètres de réglage du son sur le juke-box. Ces paramètres sont ensuite transmis au gestionnaire (12) du site qui génère alors un huitième écran (900), représenté figure 2H, et comportant une pluralité de zones (901, 902, 911.i, 912.i, 913, 914) de saisie. Une première série (901) de zones est destinée à l'affichage d'un prix correspondant au montant à acquitter pour pouvoir sélectionner un nombre déterminé de chansons. Ce nombre est affiché dans une zone d'une deuxième série (902) de zones. L'opérateur peut modifier chaque montant et chaque nombre de chansons en pointant dans la zone de saisie désirée. Le huitième écran (900) comprend également une pluralité de troisième (911.1 à 911.3) respectivement quatrième (912.1 à 912.3) zones de saisie permettant notamment à l'opérateur de choisir, sélectionner ou saisir les niveaux sonores et les niveaux de grave et d'aigu pour une première, respectivement deuxième zones de sonorisation du juke-box. Une cinquième zone (913) permet d'activer ou de désactiver un microphone utilisable avec le juke-box et une sixième zone (914) permet à l'opérateur de choisir, sélectionner ou saisir le niveau sonore du microphone. Enfin une septième zone (915) permet d'activer ou de désactiver une source auxiliaire et une huitième zone (916) permet de sélectionner, choisir, ou saisir le niveau sonore de cette source.

La validation, respectivement l'annulation, de toutes les saisies réalisées par l'opérateur s'effectue, par exemple en sélectionnant un premier (920) respectivement un deuxième (921) bouton . La sélection du premier bouton (920) dit d'annulation, annule tous les choix, sélections ou saisies réalisés par l'opérateur qui peut alors choisir, sélectionner ou saisir de nouveaux paramètres. La sélection du deuxième bouton (921) dit de validation provoque l'émission par le gestionnaire (12) du site d'une requête vers la base (11) de données. Cette requête est une requête de modifications destinée à mettre à jour les données de la base (11) en fonction des saisies réalisées par l'opérateur sur le huitième écran (900). La réception de cette requête par la base (12) de données provoque également la création d'un fichier par la base (11) de données contenant les informations de mise à jour. Ce fichier ou les informations contenues dans ce fichier sont mémorisés et destinés à être téléchargés sur le dispositif (100.1 à 100.n, fig. 1) de reproduction d'informations audiovisuelles concerné par la mise à jour dès que ce dernier établira une communication téléphonique avec le serveur central (10). Le téléchargement de ce fichier ou de ces informations sur le dispositif (100.1 à 100.n, fig. 1) de reproduction d'informations audiovisuelles provoque la mise à jour des statuts des fonctions particulières du dispositif (100.1 à 100.n, fig. 1) de reproduction d'informations audiovisuelles concernés conformément au choix de l'opérateur. Les informations correspondant à ce fichier sont, par exemple, contenues dans une des tables du dixième ensemble de tableaux (1110, fig. 6F) de la base de données (11). Lors de la prochaine communication du dispositif (100.1 à 100.n, fig. 1) de reproduction d'informations audiovisuelles concerné avec le serveur (10), ce dernier vérifie dans les tables du dixième ensemble de tableaux (1111, fig. 6F), si des instructions sont destinées au dispositif (100.1 à 100.n, fig. 1) de reproduction d'informations audiovisuelles concerné. Si tel est le cas, le serveur (10) construit un fichier de commande à partir des informations contenues dans la table du dixième ensemble de tableaux (1110, fig. 6F) correspondant, puis le serveur (10) télécharge ce fichier vers le dispositif (100.1 à 100.n, fig. 1) de reproduction d'informations audiovisuelles.

Dans une variante de réalisation, la sélection d'un sixième bouton (306) de la barre d'outils (300) provoque l'affichage d'un neuvième écran (1000) permettant de récapituler toutes les modifications qui ont été réalisées par l'opérateur pendant la connexion en cours. Pour ce faire, le neuvième écran (1000) comprend une fenêtre d'affichage (1001) visualisant, par exemple, juke-box par juke-box, toutes les modifications réalisées. Ainsi, l'opérateur peut s'assurer que les modifications sont conformes à ses souhaits. Cet écran (1000) comprend une première (1002), respectivement deuxième (1003) zone de sélection permettant d'ignorer, respectivement de valider, les modifications. Dans cette variante de réalisation, l'ensemble des requêtes envoyées au gestionnaire (12) du site « Internet » est transmis lors de cette ultime validation et non lors de la sélection d'une zone particulière de chaque écran, comme décrit précédemment.

La sélection d'un septième bouton (307) de la barre (30) d'outils provoque l'émission d'une requête par le gestionnaire (12) du site vers la base (11) de données. Cette requête est une requête d'interrogation et est traitée par la base (11) de données pour collecter les informations relatives à l'activation et à la désactivation de fonctions particulières du dispositif (100.1 à 100.n, fig. 1) de reproduction d'informations audiovisuelles sélectionné. Ces informations sont, par exemple, collectées dans au moins un des troisièmes tableaux (1103, fig. 6B et 6C) de la base de données (11). Une fois ces informations collectées, la base (11) de données répond à la requête du gestionnaire (12) du site qui construit alors un dixième écran (1010) représenté figure 2J et comprenant une pluralité de zones (1011.1 à 1011.5) de saisie indiquant l'activation ou la désactivation d'une fonction particulière du dispositif (100.1 à 100.n, fig. 1) de reproduction d'informations audiovisuelles. Une première fonction consiste à autoriser ou non l'utilisation d'une télécommande pour faire fonctionner le dispositif (100.1 à 100.n, fig. 1) de reproduction d'informations audiovisuelles. Une deuxième fonction consiste à autoriser ou non le saut de la chanson qui est en cours de reproduction. Une troisième fonction consiste à autoriser ou non la répétition successive d'une même chanson. Une quatrième fonction consiste à autoriser ou non l'utilisation de crédits gratuits sur le dispositif (100.1 à 100.n, fig. 1) de reproduction d'informations audiovisuelles.

L'opérateur peut modifier le statut de chaque fonction en modifiant l'affichage des zones (1011.1 à 1011.5) de saisie. Le dixième écran (1010) comprend également une zone (1013) provoquant l'annulation des modifications réalisées et une zone de sélection (1012) qui provoque la validation des modifications réalisées et l'envoi d'une requête de modification par le gestionnaire du site (12) vers la base (11) de données. La réception de cette requête par la base (12) de données provoque la mise à jour des informations relatives au statut des fonctions particulières du dispositif (100.1 à 100.n, fig. 1) de reproduction d'informations audiovisuelles et également, la création d'un fichier, par la base (11) de données, contenant les informations de mise à jour. Ce fichier ou les informations qu'il contient, sont mémorisés et destinés à être téléchargés sur le dispositif (100.1 à 100.n, fig. 1) de reproduction d'informations audiovisuelles concerné par la mise à jour dès que ce dernier établira une communication téléphonique avec le serveur central (10). Le téléchargement de ce fichier ou des informations sur le dispositif (100.1 à 100.n, fig. 1) de reproduction d'informations audiovisuelles provoque la mise à jour des statuts des fonctions particulières du dispositif (100.1 à 100.n, fig. 1) de reproduction d'informations audiovisuelles conformément au choix de l'opérateur. Les informations correspondant à ce fichier sont, par exemple, contenues dans l'une des tables du dixième ensemble de tableaux (1110, fig. 5) de la base de données (11). Lors de la prochaine communication du dispositif (100.1 à 100.n, fig. 1) de reproduction d'informations audiovisuelles avec le serveur (11), ce dernier vérifie dans les tables du dixième ensemble de tableaux (1110, fig. 6F), si des instructions sont destinées au dispositif (100.1 à 100.n, fig. 1) de reproduction d'informations audiovisuelles concerné. Si tel est le cas, le serveur (10) construit un fichier de commandes à partir des informations contenues dans une table du dixième ensemble de tableaux (1110, fig. 6C) correspondant, puis le serveur (10) télécharge ce fichier vers le dispositif (100.1 à 100.n, fig. 1) de reproduction d'informations audiovisuelles concerné.

La sélection d'un huitième bouton (308) de la barre d'outils (300) provoque l'affichage d'un onzième écran (non représenté) par le gestionnaire (12) du site. Ce onzième écran comprend une pluralité de fenêtres permettant à l'opérateur de définir une configuration de base pour tout ou partie des dispositifs (100.1 à 100.n) de reproduction d'informations audiovisuelles sélectionnés. Les différentes zones permettent, notamment de définir le type d'interface graphique qui sera affiché sur les systèmes (100.1 à 100.n, fig. 1) de reproduction d'informations audiovisuelles, ainsi que les paramètres de fonctionnement qui seront installés par défaut sur les systèmes (100.1 à 100.n, fig. 1) de reproduction d'informations audiovisuelles sélectionnés, tels que les heures de disponibilité du modem du dispositif (100.1 à 100.n, fig. 1) de reproduction d'informations audiovisuelles pour procéder à des communications entre le dispositif (100.1 à 100.n, fig. 1) de reproduction d'informations audiovisuelles et le serveur (10). Le onzième écran comprend également une zone de sélection provoquant la validation des informations saisies sur le onzième écran et déclenche la construction puis l'envoi d'une requête par le gestionnaire (12) du site, vers la base (12) de données. Cette requête comporte toutes les informations saisies par l'opérateur sur le onzième écran. Le traitement de cette requête par la base de données (11) provoque la création d'un fichier de mise à jour. Ce fichier ou les informations qu'il contient, sont mémorisés et destinés à être téléchargés sur les systèmes (100.1 à 100.n, fig. 1) de reproduction d'informations audiovisuelles concernés par la mise à jour dès que ce dernier établira une communication téléphonique avec le serveur central (10). De même, ce fichier ou les informations seront téléchargées sur un nouveau dispositif (100.1 à 100.n, fig. 1) de reproduction d'informations audiovisuelles géré par l'opérateur dès la première communication du dispositif (100.1 à 100.n, fig. 1) de reproduction d'informations audiovisuelles au serveur (10) central. Le téléchargement de ce fichier ou des informations sur un dispositif (100.1 à 100.n, fig. 1) de reproduction d'informations audiovisuelles provoque la mise à jour de sa configuration et de ses paramètres de fonctionnement conformément à la configuration définie par l'opérateur par l'intermédiaire du onzième écran. Les informations correspondant à ce fichier sont contenues, par exemple, dans l'un des dixièmes tableaux (1110, fig. 6F) de la base de données (11). Lors de la prochaine communication du dispositif (100.1 à 100.n, fig. 1) de reproduction d'informations audiovisuelles avec le serveur (11), ce dernier vérifie dans les dixièmes tableaux (1110, fig. 5), si des instructions sont destinées au dispositif (100.1 à 100.n, fig. 1) de reproduction d'informations audiovisuelles. Si tel est le cas, le serveur (10) construit un fichier de commandes à partir des informations contenues dans les dixièmes tableaux (1110, fig. 6C) correspondants, puis le serveur (10) télécharge ce fichier vers le dispositif (100.1 à 100.n, fig. 1) de reproduction d'informations audiovisuelles.

Lorsque l'opérateur sélectionne plusieurs systèmes (100.1 à 100.n, fig. 1) de reproduction d'informations audiovisuelles lors de l'affichage du premier écran (200), soit l'affichage des écrans précédemment décrits est réalisé pour chaque dispositif (100.1 à 100.n, fig. 1) de reproduction d'informations audiovisuelles de la sélection, soit les opérations de mise à jour sont prises en compte pour tous les systèmes (100.1 à 100.n, fig. 1) de reproduction d'informations audiovisuelles de la sélection. Le choix entre l'une ou l'autre des possibilités est réalisé, par exemple, par l'affichage d'écrans supplémentaires (non représentés) invitant l'opérateur après chaque validation à indiquer le ou les numéros des dispositifs (100.1 à 100.n) de reproduction d'informations audiovisuelles auxquels doivent s'appliquer les mises à jour qui viennent d'être validées.

D'une manière générale, les opérations de gestion des dispositifs (100.1 à 100.n) de reproduction d'informations audiovisuelles ou de visualisation des informations relatives à l'utilisation des dispositifs (100.1 à 100.n) de reproduction d'informations audiovisuelles, réalisées par l'intermédiaire des différents écrans affichés par le gestionnaire (12) du site " Internet" correspondent au moins aux opérations de gestion et de visualisation disponibles sur chaque dispositif (100.1 à 100.n, fig. 1) de reproduction d'informations audiovisuelles.

On conçoit que le système selon l'invention facilite toutes les opérations de gestion et de configuration réalisées par les opérateurs sur les systèmes (100.1 à 100.n, fig. 1) de reproduction d'informations audiovisuelles. En effet, l'exécution de ces opérations ne nécessite plus le déplacement de l'opérateur sur le lieu d'implantation de chaque dispositif (100.1 à 100.n, fig. 1) de reproduction d'informations audiovisuelles. De même, lorsqu'un opérateur gère plusieurs systèmes (100.1 à 100.n, fig. 1) de reproduction d'informations audiovisuelles simultanément, il peut réaliser en une seule manipulation la reconfiguration de tout ou partie des dispositifs (100.1 à 100.n) de reproduction d'informations audiovisuelles.

Ainsi, le système de gestion à distance d'un dispositif de reproduction d'informations audiovisuelles se caractérise en ce que le serveur central comprend également un gestionnaire de site " Internet " communiquant avec la base de données, le site " Internet " étant accessible par un opérateur chargé de la gestion d'au moins un dispositif de reproduction d'informations audiovisuelles, et comprenant une pluralité d'écrans, au moins un premier écran comprenant un menu déroulant visualisant la liste des systèmes de reproduction d'informations audiovisuelles implantés localement dont les informations relatives à l'utilisation sont disponibles, la validation du choix d'au moins un dispositif de reproduction d'informations audiovisuelles provoquant l'affichage d'une première série d'écrans permettant à l'opérateur de modifier les paramètres de fonctionnement de chaque système sélectionné de reproduction d'informations audiovisuelles et/ou une deuxième série d'écrans permettant à l'opérateur de commander au moins une chanson en vue de son téléchargement sur chaque dispositif de reproduction d'une liste choisie de dispositifs ou de supprimer au moins une chanson et/ou une troisième série d'écrans visualisant des informations relatives à l'utilisation d'un dispositif de reproduction d'informations audiovisuelles.

Selon une autre particularité, les informations relatives au fonctionnement de chaque dispositif de reproduction d'informations audiovisuelles affichées dans chaque écran ainsi que la liste des chansons disponibles, sont collectées par le gestionnaire du site " Internet " dans la base de données.

Selon une autre particularité, les modifications réalisées par l'opérateur dans la première et/ou deuxième série d'écrans sont mémorisées dans un fichier et traduites dans le langage de la base de données pour mettre à jour les données modifiées dans ces séries d'écrans et mettre à jour chaque dispositif de reproduction d'informations audiovisuelles concerné par les modifications dès qu'une communication s'établit entre le serveur central et chaque dispositif de reproduction d'informations audiovisuelles.

Selon une autre particularité, le gestionnaire du site " Internet" comprend des moyens d'authentification de l'opérateur destinés à limiter l'accès de l'opérateur aux systèmes de reproduction d'informations audiovisuelles dont il a la gestion.

Selon une autre particularité, les écrans des première et deuxième séries d'écrans, comprennent une barre d'outils comportant une pluralité de boutons de sélection déclenchant, soit l'affichage d'un écran de la première ou deuxième série d'écrans, soit la validation des opérations réalisées sur l'écran en cours d'affichage.

Selon une autre particularité, un premier bouton de sélection de la barre d'outil déclenche l'affichage d'un troisième écran comportant une première fenêtre visualisant des informations relatives à l'implantation du dispositif de reproduction d'informations audiovisuelles choisi par l'opérateur, et une zone de saisie pour mettre à jour, s'il y a lieu, les informations visualisées dans la première fenêtre.

Selon une autre particularité, un deuxième bouton de sélection de la barre d'outils déclenche l'affichage d'un quatrième écran de la deuxième série d'écrans comprenant une pluralité de zones de saisie destinées à définir des critères de sélection pour sélectionner des chansons, la liste des chansons correspondant au critère de sélection étant, dans un premier temps, collectée dans la base de données par l'intermédiaire de l'envoi d'une requête contenant les critères choisis par l'opérateur par l'intermédiaire des zones de saisie par le gestionnaire du site, et ,dans un deuxième temps, affichée dans une fenêtre déroulante du quatrième écran.

Selon une autre particularité, la validation du choix d'une chanson sélectionnée dans la fenêtre déroulante du quatrième écran déclenche l'affichage d'un cinquième écran comprenant une pluralité de champs contenant des éléments d'identification de la chanson sélectionnée, une fenêtre déroulante visualisant la liste des dispositifs de reproduction d'informations audiovisuelles gérés par l'opérateur, une première zone de sélection validant, par l'envoi d'une requête au gestionnaire du site, l'achat, pour les dispositifs de reproduction d'informations audiovisuelles sélectionnés par l'opérateur dans la fenêtre déroulante, de la chanson sélectionnée, et une deuxième zone de sélection déclenchant à nouveau l'affichage du quatrième écran.

Selon une autre particularité, un troisième bouton de sélection de la barre d'outils déclenche l'affichage d'un sixième écran comportant une pluralité de champs contenant des informations relatives à l'utilisation du dispositif de reproduction d'informations audiovisuelles choisi par l'opérateur, une première, respectivement deuxième fenêtre déroulante contenant la liste des chansons devant être téléchargées, respectivement supprimées du dispositif de reproduction d'informations audiovisuelles choisi par l'opérateur, et une première, respectivement deuxième zone de sélection déclenchant l'annulation du téléchargement, respectivement de la suppression d'une ou plusieurs chansons préalablement sélectionnées par l'opérateur dans la première, respectivement deuxième fenêtre déroulante.

Selon une autre particularité, un quatrième bouton de sélection de la barre d'outils déclenche l'affichage d'un septième écran comportant, une pluralité de champs contenant des informations relatives aux statistiques d'utilisation du dispositif de reproduction d'informations choisi par l'opérateur, une première, respectivement deuxième fenêtre déroulante contenant la liste des chansons les plus, respectivement les moins jouées sur le dispositif de reproduction d'informations audiovisuelles choisi par l'opérateur, le septième écran comprend également une zone de sélection déclenchant la suppression de la ou des chansons sélectionnées par l'opérateur dans la deuxième fenêtre déroulante.

Selon une autre particularité, un cinquième bouton de sélection de la barre d'outils déclenche l'affichage d'un huitième écran comportant une première série de zones de saisie permettant à l'opérateur de choisir un prix par zone et une deuxième série de zones de saisie permettant à l'opérateur de choisir, pour chaque prix, le nombre de sélections possibles après acquittement du prix.

Selon une autre particularité, le huitième écran comprend une pluralité de zones de saisie, permettant de choisir, sélectionner ou saisir les paramètres souhaités pour régler des moyens de reproduction sonore du dispositif de reproduction d'informations audiovisuelles choisi par l'opérateur.

Selon une autre particularité, un sixième bouton de sélection de la barre d'outils déclenche l'affichage d'un neuvième écran comportant une fenêtre visualisant l'ensemble des modifications réalisées par l'opérateur lors de sa connexion au site Internet géré par le gestionnaire du site, une première zone de sélection déclenchant la validation de l'ensemble des opérations affichées dans la première fenêtre, et une deuxième zone de sélection annulant toutes ces modifications.

Selon une autre particularité, un septième bouton de sélection déclenche l'affichage d'un dixième écran comportant au moins une zone de sélection permettant d'activer ou de désactiver une fonction particulière du dispositif de reproduction d'informations audiovisuelles.

Selon une autre particularité, un huitième bouton de la barre d'outils déclenche l'affichage d'un écran destiné à définir une configuration de base par défaut de tout ou partie des dispositifs de reproduction d'informations audiovisuelles gérés par l'opérateur.

Selon une autre particularité, la deuxième série d'écrans comprend un écran comportant un premier menu de sélection de la catégorie de chanson souhaitée par l'opérateur, un deuxième menu de sélection du style de chanson souhaité par l'opérateur et une zone de sélection validant le choix de l'opérateur pour déclencher l'affichage d'un deuxième écran comportant une première fenêtre visualisant la liste des chansons correspondant à la catégorie et au style choisis par l'opérateur, une deuxième fenêtre visualisant la liste des chansons sélectionnées par l'opérateur dans la liste de la première fenêtre et une zone de sélection validant le choix de l'opérateur.

Selon une autre particularité, la liste des chansons visualisées est collectée dans la base de données parmi les chansons les plus jouées sur l'ensemble des juke-box de l'opérateur ou parmi les chansons les plus jouées sur l'ensemble des juke-box gérés par le serveur ou parmi les chansons les plus jouées sur l'ensemble des juke-box installés dans des établissements appartenant à une même catégorie déterminée.

Selon une autre particularité, la deuxième fenêtre comprend également la liste des chansons déjà mémorisées sur le dispositif de reproduction d'informations audiovisuelles.

Selon une autre particularité, la troisième série d'écrans comprend au moins un écran comportant une fenêtre visualisant la liste des chansons jouées par le dispositif de reproduction d'informations audiovisuelles ainsi que la date à laquelle chaque chanson a été jouée, et/ou au moins un écran comportant une fenêtre indiquant la ou les dates à laquelle ou auxquelles le dispositif de reproduction d'informations audiovisuelles a été mis hors tension et/ou sous tension, et/ou une fenêtre indiquant la ou les dates à laquelle ou auxquelles une communication entre le dispositif de reproduction d'informations audiovisuelles et le serveur central a été interrompue.

Selon une autre particularité, le système comprend un système d'enregistrement magnétique ou optique de sorte que les chansons sélectionnées par l'opérateur soient enregistrées sur un support magnétique ou optique portable, ou un mémoire électronique à l'état solide, préférentiellement à semi-conducteur.

Selon une autre particularité, l'enregistrement des chansons sur le support magnétique ou optique portable est réalisé dans un format compressé et de façon cryptée, la décompression et le décryptage des chansons n'étant réalisés que lors de l'exécution de la chanson sur un dispositif de reproduction d'informations audiovisuelles.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Système de gestion à distance d'au moins un dispositif de reproduction d'informations audiovisuelles comprenant un serveur (10) central connecté aux moyens de télécommunication de chaque dispositif (100.1à 100.n) de reproduction d'informations audiovisuelles, le serveur (10) central comprenant des moyens (13) de mémorisation permettant de stocker une base (11) de données comprenant des informations de gestion de chaque dispositif (100.1 à 100.n, fig. 1) de reproduction d'informations audiovisuelles, l'ensemble des informations audiovisuelles associées aux chansons disponibles, **caractérisé en ce que** la base de données comprend l'ensemble des configurations de chaque dispositif (100.1 à 100.n, fig. 1) de reproduction d'informations audiovisuelles, le serveur (10) central comprend également un gestionnaire (12) de site " Internet " communiquant avec la base (11) de données, le site " Internet " étant accessible par un opérateur chargé de la gestion d'au moins un dispositif (100.1 à 100.n, fig. 1) de reproduction d'informations audiovisuelles, et comprenant une pluralité d'écrans (200, à1010), au moins un premier écran (200) comprenant un menu déroulant visualisant la liste des dispositifs (100.1 à 100.n) de reproduction d'informations audiovisuelles implantés localement dont les informations relatives à l'utilisation sont disponibles, la validation du choix de chaque dispositif (100.1 à 100.n, fig. 1) sélectionné de reproduction d'informations audiovisuelles provoquant l'affichage d'une première série d'écrans (900, 1010) permettant à l'opérateur de gérer la configuration en modifiant les paramètres de fonctionnement d'au moins un dispositif (100.1 à 100.n, fig. 1) de reproduction d'informations audiovisuelles par l'envoi par le serveur vers les dispositifs concernés d'un fichier de commandes de modifications généré par le serveur par utilisation d'informations de la base de données.

2. Système de gestion à distance d'au moins un dispositif de reproduction d'informations audiovisuelles selon la revendication 1, **caractérisé en ce que** la validation du choix, sur le premier écran (200), de chaque dispositif (100.1 à 100.n, fig. 1) sélectionné de reproduction d'informations audiovisuelles provoque également l'affichage d'une deuxième série d'écrans (500 à 800) permettant à l'opérateur de commander au moins une chanson en vue du téléchargement des informations audiovisuelles associées à la chanson sur les systèmes (100.1 à 100.n, fig. 1) de reproduction d'informations audiovisuelles d'une liste choisie de dispositifs (100.1 à 100.n, fig. 1) ou de supprimer au moins un enregistrement audiovisuel et/ouune troisième série d'écrans visualisant les informations de gestion relatives à l'utilisation d'un dispositif (100.1 à 100.n, fig. 1) de reproduction d'informations audiovisuelles.

3. Système de gestion à distance d'au moins un dispositif de reproduction d'informations audiovisuelles selon la revendication 1 ou 2, **caractérisé en ce que** les informations relatives au fonctionnement de chaque dispositif (100.1 à 100.n, fig. 1) de reproduction d'informations audiovisuelles affichées dans chaque écran ainsi que la liste des chansons disponibles sont collectées par le gestionnaire (12) du site " Internet " dans la base (11) de données.

4. Système de gestion à distance d'au moins un dispositif de reproduction d'informations audiovisuelles selon la revendication 1, 2 ou 3, **caractérisé en ce que** les modifications réalisées par l'opérateur dans la première et/ou deuxième série d'écrans sont mémorisées dans un fichier et traduites dans le langage de la base (11) de données pour mettre à jour les données modifiées dans ces séries d'écrans et mettre à jour chaque dispositif (100.1 à 100.n, fig. 1) de reproduction d'informations audiovisuelles concerné par les modifications dès qu'une communication s'établit entre le serveur (10) central et chaque dispositif (100.1 à 100.n, fig. 1) de reproduction d'informations audiovisuelles.

5. Système de gestion à distance d'au moins un dispositif de reproduction d'informations audiovisuelles selon l'une des revendications 1 à 4, **caractérisé en ce que** le gestionnaire (12) du site " Internet " comprend des moyens (400) d'authentification de l'opérateur destinés à limiter l'accès de l'opérateur aux systèmes (100.1 à 100.n, fig. 1) de reproduction d'informations audiovisuelles dont il a la gestion.

6. Système de gestion à distance d'au moins un dispositif de reproduction d'informations audiovisuelles selon l'une des revendications 1 à 5, **caractérisé en ce que** les écrans des première et deuxième séries d'écrans, comprennent une barre d'outils (300) comportant une pluralité de boutons (301 à 308) de sélection déclenchant soit l'affichage d'un écran de la première ou deuxième série d'écrans, soit la validation des opérations réalisées sur l'écran en cours d'affichage.

7. Système de gestion à distance d'au moins un dispositif de reproduction d'informations audiovisuelles selon la revendication 6, **caractérisé en ce qu'**un premier bouton (301) de sélection de la barre (300) d'outils déclenche l'affichage d'un troisième écran (400) comportant une première fenêtre (401) visualisant des informations relatives à l'implantation du dispositif de reproduction d'informations audiovisuelles choisi par l'opérateur, et une zone de saisie (402) pour mettre à jour, s'il y a lieu, les informations visualisées dans la première fenêtre (401).

8. Système de gestion à distance d'au moins un dispositif de reproduction d'informations audiovisuelles selon la revendication 6 ou 7, **caractérisé en ce qu'**un deuxième bouton (302) de sélection de la barre (300) d'outils déclenche l'affichage d'un quatrième écran (500) de la deuxième série d'écrans comprenant une pluralité de zones de saisie (505.i, 501.i, 502) destinées à définir des critères de sélection pour sélectionner des chansons, la liste des chansons correspondantes étant dans un premier temps collectée dans la base de données (11) par l'intermédiaire de l'envoi d'une requête contenant les critères choisis par l'opérateur par l'intermédiaire des zones de saisie (505.i, 501.i, 502), par le gestionnaire (12) du site, et dans un deuxième temps, affichée dans une fenêtre (507) déroulante de l'écran (500).

9. Système de gestion à distance d'au moins un dispositif de reproduction d'informations audiovisuelles selon la revendication 8, **caractérisé en ce que** la validation du choix d'une chanson sélectionnée dans la fenêtre (507) déroulante du quatrième écran (500) déclenche l'affichage d'un cinquième écran (600) comprenant une pluralité de champs (601.1 à 601.4) contenant des éléments d'identification de la chanson sélectionnée, une fenêtre (602) déroulante visualisant la liste des dispositifs de reproduction d'informations audiovisuelles gérés par l'opérateur, une première zone (603) de sélection validant, par l'envoi d'une requête au gestionnaire (12) du site, l'achat de la chanson sélectionnée pour les dispositifs de reproduction d'informations audiovisuelles sélectionnés par l'opérateur dans la fenêtre (602) déroulante, et une deuxième zone (604) de sélection déclenchant à nouveau l'affichage du quatrième écran (500).

10. Système de gestion à distance d'au moins un dispositif de reproduction d'informations audiovisuelles selon la revendication 6, **caractérisé en ce qu'**un troisième bouton de sélection (303) de la barre d'outils (300) déclenche l'affichage d'un sixième écran (700) comportant, premièrement une pluralité de champs (701.1 à 701.7) contenant des informations relatives à l'utilisation du dispositif de reproduction d'informations audiovisuelles choisi par l'opérateur, deuxièmement une première (702), respectivement deuxième (704) fenêtre déroulante contenant la liste des chansons devant être téléchargées, respectivement supprimées du dispositif de reproduction d'informations audiovisuelles choisi par l'opérateur, et troisièmement une première (703), respectivement deuxième (705) zone de sélection déclenchant l'annulation du téléchargement, respectivement de la suppression d'une ou plusieurs chansons préalablement sélectionnées par l'opérateur dans la première (702) respectivement deuxième (704) fenêtre déroulante.

11. Système de gestion à distance d'au moins un dispositif de reproduction d'informations audiovisuelles selon la revendication 6, **caractérisé en ce qu'**un quatrième bouton de sélection (304) de la barre d'outils (300) déclenche l'affichage d'un septième écran (800) comportant une pluralité de champs (801.1 à 801.3) contenant des informations relatives aux statistiques d'utilisation du dispositif de reproduction d'informations choisi par l'opérateur, une première (802), respectivement deuxième (803) fenêtre déroulante contenant la liste des chansons les plus, respectivement les moins jouées sur le dispositif de reproduction d'informations audiovisuelles choisi par l'opérateur, le septième écran (800) comprend également une zone de sélection (804) déclenchant la suppression de la ou des chansons sélectionnées par l'opérateur dans la deuxième fenêtre déroulante (804).

12. Système de gestion à distance d'au moins un dispositif de reproduction d'informations audiovisuelles selon la revendication 6, **caractérisé en ce qu'**un cinquième bouton de sélection (305) de la barre d'outils (300) déclenche l'affichage d'un écran (900) comportant, une première série de zones (901) de saisie permettant à l'opérateur de choisir, sélectionner ou saisir un prix par zone et une deuxième série de zones (902) de saisie permettant à l'opérateur de choisir, sélectionner ou saisir, pour chaque prix, le nombre de sélections possibles après acquittement du prix.

13. Système de gestion à distance d'au moins un dispositif de reproduction d'informations audiovisuelles selon la revendication 6, **caractérisé en ce que** le huitième écran (900) comprend une pluralité de zones (911.1 à 911.3, 912.1 à 912.3, 913, 914) de saisie, permettant de choisir, sélectionner ou saisir les paramètres de réglages des moyens de reproduction sonore pour le dispositif de reproduction d'informations audiovisuelles choisi par l'opérateur.

14. Système de gestion à distance d'au moins un dispositif de reproduction d'informations audiovisuelles selon la revendication 6, **caractérisé en ce qu'**un sixième bouton (306) de sélection de la barre (300) d'outils déclenche l'affichage d'un neuvième écran (1000) comportant une fenêtre (1001) visualisant l'ensemble des modifications réalisées par l'opérateur lors de sa connexion au site Internet géré par le gestionnaire (12) du site, une première zone (1003) de sélection déclenchant la validation de l'ensemble des opérations affichées dans la première fenêtre (1001), et une deuxième zone (1002) de sélection annulant toutes ces modifications.

15. Système de gestion à distance d'au moins un dispositif de reproduction d'informations audiovisuelles selon la revendication 6, **caractérisé en ce qu'**un septième bouton (307) de sélection déclenche l'affichage d'un écran (1010) comportant au moins une zone de sélection (1010.1 à 1010.5) permettant d'activer ou de désactiver une fonction particulière du dispositif (100.1 à 100.n, fig. 1) de reproduction d'informations audiovisuelles.

16. Système de gestion à distance d'au moins un dispositif de reproduction d'informations audiovisuelles selon l'une des revendications 6 à 8, **caractérisé en ce qu'**un huitième bouton (308) de la barre d'outils (300) déclenche l'affichage d'un écran destiné à définir une configuration de base par défaut de tout ou partie des dispositifs (100.1 à 100.n) de reproduction d'informations audiovisuelles gérés par l'opérateur.

17. Système de gestion à distance d'au moins un dispositif de reproduction d'informations audiovisuelles selon l'une des revendications 1 à 9, **caractérisé en ce que** la deuxième série d'écrans (700, 800) comprend un écran (700) comportant un premier menu (701) de sélection de la catégorie de chansons souhaitées par l'opérateur, un deuxième menu (701) de sélection du style de chansons souhaités par l'opérateur et une zone de sélection (703) validant le choix de l'opérateur pour déclencher l'affichage d'un deuxième écran (800) comportant une premier fenêtre (801) visualisant la liste des chansons correspondant à la catégorie et au style choisis par l'opérateur, une deuxième fenêtre (802) visualisant la liste des chansons sélectionnées par l'opérateur dans la liste de la première fenêtre et une zone de sélection (805) validant le choix de l'opérateur.

18. Système de gestion à distance d'au moins un dispositif de reproduction d'informations audiovisuelles selon la revendication 17, **caractérisé en ce que** la liste des chansons visualisées est collectée dans la base de données parmi les chansons les plus jouées sur l'ensemble des juke-box de l'opérateur ou parmi les chansons les plus jouées sur l'ensemble des juke-box gérés par le serveur (10) ou parmi les chansons les plus jouées sur l'ensemble des juke-box installés dans des établissements appartenant à une catégorie déterminée.

19. Système de gestion à distance d'au moins un dispositif de reproduction d'informations audiovisuelles selon la revendication 10, **caractérisé en ce que** la deuxième fenêtre (802) comprend également la liste des chansons déjà mémorisées sur le dispositif (100.1 à 100.n, fig. 1) de reproduction d'informations audiovisuelles.

20. Système de gestion à distance d'au moins un dispositif de reproduction d'informations audiovisuelles selon l'une des revendications 1 à 11, **caractérisé en ce que** la troisième série d'écrans comprend au moins un écran comportant une fenêtre visualisant la liste des chansons jouées par le dispositif (100.1 à 100.n, fig. 1) de reproduction d'informations audiovisuelles ainsi que la date à laquelle chaque chanson a été jouée, et/ou au moins un écran comportant une fenêtre indiquant la ou les dates à laquelle ou auxquelles le dispositif de reproduction d'informations audiovisuelles a été mis hors tension et/ou sous tension, et/ou une fenêtre indiquant la ou les dates à laquelle ou auxquelles une communication entre le dispositif de reproduction d'informations audiovisuelles et le serveur central a été interrompue.

21. Système de gestion à distance d'au moins un dispositif de reproduction d'informations audiovisuelles selon la revendication 10, **caractérisé en ce que** le système comprend un système d'enregistrement magnétique ou optique de sorte que les chansons sélectionnées par l'opérateur soient enregistrées sur un support magnétique ou optique portable.

22. Système de gestion à distance d'au moins un dispositif de reproduction d'informations audiovisuelles selon la revendication 13, **caractérisé en ce que** l'enregistrement des chansons sur le support magnétique ou optique portable est réalisé dans un format compressé et de façon cryptée, la décompression et le décryptage des chansons n'étant réalisés que lors de l'exécution de la chanson sur un dispositif (100.1 à 100.n, fig. 1) de reproduction d'informations audiovisuelles.

## Claims

1. System for remote management of at least one audio-visual information reproduction device comprising a central server (10) connected to the telecommunication means of each audio-visual information reproduction device (100.1 to 100.n), the central server (10) comprising storage means (13) making it possible to store a data base (11) comprising management information for each audio-visual information reproduction device (100.1 to 100.n, Fig. 1), all the audio-visual information associated with the available songs, **characterised in that** the data base comprises all the configurations of each audio-visual information reproduction device (100.1 to 100.n, Fig. 1), the central server (10) also comprises an "Internet" site manager (12) communicating with the data base (11), the "Internet" site being accessible by an operator responsible for managing at least one audio-visual information reproduction device (100.1 to 100.n, Fig. 1), and comprising a plurality of screens (200 to 1010), at least one first screen (200) comprising a drop-down menu displaying a list of the audio-visual information reproduction devices (100.1 to 100.n) installed locally for which information relating to use is available, validation of the choice of each selected audio-visual information reproduction device (100.1 to 100.n, Fig. 1) causing the display of a first series of screens (900, 1010) allowing the operator to manage configuration by modifying the operating parameters of at least one audio-visual information reproduction device (100.1 to 100.n, Fig. 1) by sending via the server to the devices concerned a file of modification commands generated by the server by using information from the data base.

2. System for remote management of at least one audio-visual information reproduction device according to Claim 1, **characterised in that** validation of the choice, on the first screen (200), of each selected audio-visual information reproduction device (100.1 to 100.n, Fig. 1) also causes the display of a second series of screens (500 to 800) allowing the operator to order at least one song with a view to uploading the audio-visual information associated with the song to the audio-visual information reproduction systems (100,1 to 100.n, Fig. 1) of a chosen list of devices (100.1 to 100.n, Fig. 1) or to remove at least one audio-visual recording, and/or a third series of screens displaying management information relating to the use of an audio-visual information reproduction device (100.1 to 100.n, Fig. 1).

3. System for remote management of at least one audio-visual information reproduction device according to Claim 1 or 2, **characterised in that** information relating to the operation of each audio-visual information reproduction device (100.1 to 100.n, Fig. 1) displayed in each screen, as well as the list of songs available, is collected by the "Internet" site manager (12) in the data base (11).

4. System for remote management of at least one audio-visual information reproduction device according to Claim 1, 2 or 3, **characterised in that** the modifications carried out by the operator in the first and/or second series of screens are stored in a file and translated into the language of the data base (11) in order to update the modified data in these series of screens and to update each audio-visual information reproduction device (100.1 to 100.n, Fig.1) concerned with the modifications as soon as communication is established between the central server (10) and each audio-visual information reproduction device (100.1 to 100.n, Fig. 1).

5. System for remote management of at least one audio-visual information reproduction device according to one of Claims 1 to 4, **characterised in that** the "Internet" site manager (12) comprises means (400) for authenticating the operator intended to limit access by the operator to the audio-visual information reproduction systems (100.1 to 100.n, Fig. 1) that it manages.

6. System for remote management of at least one audio-visual information reproduction device according to one of Claims 1 to 5, **characterised in that** the screens from the first and second series of screens comprise a toolbar (300) comprising a plurality of select buttons (301 to 308) triggering either the display of a screen from the first or second series of screens, or validation of the operations carried out on the screen currently being displayed.

7. System for remote management of at least one audio-visual information reproduction device according to Claim 6, **characterised in that** a first select button (301) of the toolbar (300) triggers the display of a third screen (400) comprising a first window (401) displaying information relating to the installation of the audio-visual information reproduction device chosen by the operator, and a data entry zone (402) for updating the information displayed in the first window (401), if necessary.

8. System for remote management of at least one audio-visual information reproduction device according to Claim 6 or 7, **characterised in that** a second select button (302) of the toolbar (300) triggers the display of a fourth screen (500) from the second series of screens comprising a plurality of data entry zones (505.i, 501.i, 502) intended to define selection criteria for selecting songs, the list of corresponding songs being first collected from the data base (11) by sending a request from the site manager (12) containing the criteria chosen by the operator via the data entry zones (505.i, 501.i, 502), and then displayed in a scrolling window (507) of the screen (500).

9. System for remote management of at least one audio-visual information reproduction device according to Claim 8, **characterised in that** validation of the choice of a song selected from the scrolling window (507) of the fourth screen (500) triggers the display of a fifth screen (600) comprising a plurality of fields (601.1 to 601.4) containing elements for identifying the selected song, a scrolling window (602) displaying a list of the audio-visual information reproduction devices managed by the operator, a first selection zone (603) validating, by a request sent to the site manager (12), the purchase of the selected song for the audio-visual information reproduction devices selected by the operator from the scrolling window (602), and a second selection zone (604) again triggering the display of the fourth screen (500).

10. System for remote management of at least one audio-visual information reproduction device according to Claim 6, **characterised in that** a third select button (303) of the toolbar (300) triggers the display of a sixth screen (700) comprising first a plurality of fields (701.1 to 701.7) containing information relating to the use of the audio-visual information reproduction device chosen by the operator, then a first (702) and second (704) scrolling window, respectively, containing a list of the songs that are to be uploaded to or removed from the audio-visual information reproduction device chosen by the operator, and lastly a first (703) and second (705) selection zone, respectively, triggering the cancellation of the download or removal of one or more songs selected beforehand by the operator from the first (702) or second (704) scrolling window, respectively.

11. System for remote management of at least one audio-visual information reproduction device according to Claim 6, **characterised in that** a fourth select button (304) of the toolbar (300) triggers the display of a seventh screen (800) comprising a plurality of fields (801.1 to 801.3) containing information relating to the usage statistics of the information reproduction device chosen by the operator, a first (802) and second (803) scrolling window, respectively, containing a list of the songs that are the most or the least played, respectively, on the audio-visual information reproduction device chosen by the operator, the seventh screen (800) also comprises a selection zone (804) triggering the removal of the song(s) selected by the operator from the second scrolling window (804).

12. System for remote management of at least one audio-visual information reproduction device according to Claim 6, **characterised in that** a fifth select button (305) of the toolbar (300) triggers the display of a screen (900) comprising a first series of data entry zones (901) allowing the operator to choose, select or enter a price by zone and a second series of data entry zones (902) allowing the operator to choose, select or enter, for each price, the number of possible selections after payment of the price.

13. System for remote management of at least one audio-visual information reproduction device according to Claim 6, **characterised in that** the eighth screen (900) comprises a plurality of data entry zones (911.1 to 911.3, 912.1 to 912.3, 913, 914), making it possible to choose, select or enter the parameters for adjusting the sound reproduction means for the audio-visual information reproduction device chosen by the operator.

14. System for remote management of at least one audio-visual information reproduction device according to Claim 6, **characterised in that** a sixth select button (306) of the toolbar (300) triggers the display of a ninth screen (1000) comprising a window (1001) displaying all the modifications carried out by the operator when connected to the Internet site managed by the site manager (12), a first selection zone (1003) triggering the validation of all the operations displayed in the first window (1001) and a second selection zone (1002) cancelling all these modifications.

15. System for remote management of at least one audio-visual information reproduction device according to Claim 6, **characterised in that** a seventh select button (307) triggers the display of a screen (1010) comprising at least one selection zone (1010.1 to 1010.5) making it possible to activate or deactivate a particular function of the audio-visual information reproduction device (100.1 to 100.n, Fig. 1).

16. System for remote management of at least one audio-visual information reproduction device according to one of Claims 6 to 8, **characterised in that** an eighth button (308) of the toolbar (300) triggers the display of a screen intended to define a basic default configuration of all or some of the audio-visual information reproduction devices (100.1 to 100.n) managed by the operator.

17. System for remote management of at least one audio-visual information reproduction device according to one of Claims 1 to 9, **characterised in that** the second series of screens (700, 800) comprises a screen (700) comprising a first selection menu (701) for the category of songs wanted by the operator, a second selection menu (701) for the style of songs wanted by the operator and a selection zone (703) validating the choice of the operator in order to trigger the display of a second screen (800) comprising a first window (801) displaying the list of the songs corresponding to the category and style selected by the operator, a second window (802) displaying the list of the songs selected by the operator from the list in the first window and a selection zone (805) validating the choice of the operator.

18. System for remote management of at least one audio-visual information reproduction device according to Claim 17, **characterised in that** the list of displayed songs is collected from the data base from among the most played songs on all the juke-boxes of the operator or from among the most played songs on all the juke-boxes managed by the server (10) or from among the most played songs on all the juke-boxes installed in establishments in a given category.

19. System for remote management of at least one audio-visual information reproduction device according to Claim 10, **characterised in that** the second window (802) also comprises the list of songs already stored on the audio-visual information reproduction device (100.1 to 100.n, Fig. 1).

20. System for remote management of at least one audio-visual information reproduction device according to one of Claims 1 to 11, **characterised in that** the third series of screens comprises at least one screen comprising a window displaying the list of the songs played by the audio-visual information reproduction device (100.1 to 100.n, Fig. 1) as well as the date on which each song was played, and/or at least one screen comprising a window indicating the date(s) on which the audio-visual information reproduction device was switched off and/or on, and/or a window indicating the date(s) on which communication between the audio-visual information reproduction device and the central server was stopped.

21. System for remote management of at least one audio-visual information reproduction device according to Claim 10, **characterised in that** the system comprises a magnetic or optical recording system so that the songs selected by the operator are recorded onto a portable magnetic or optical medium.

22. System for remote management of at least one audio-visual information reproduction device according to Claim 13, **characterised in that** the recording of the songs on the portable magnetic or optical medium is carried out in a compressed format and encrypted, the songs being uncompressed and decrypted only when the song is performed on an audio-visual information reproduction device (100.1 to 100.n, Fig. 1).

## Patentansprüche

1. System zur Fernverwaltung von wenigstens einem Wiedergabegerät von audiovisuellen Informationen, das einen zentralen Server (10) umfasst, der mit den Telekommunikationsmitteln von jedem audiovisuellen Wiedergabegerät (100,1 bis 100.n) verbunden ist, wobei der zentrale Server (10) über Speichermittel (13) verfügt, die das Speichern einer Datenbank (11) ermöglichen, welche Informationen zur Verwaltung von jedem audiovisuellen Wiedergabegerät (100.1 bis 100.n, Fig.1) enthält sowie die Gesamtheit der audiovisuellen Informationen zugeordnet den verfügbaren Liedern, **dadurch gekennzeichnet, dass** die Datenbank die Gesamtheit der Konfigurationen aus jedem audiovisuellen Wiedergabegerät (100.1 bis 100.n, Fig.1) enthält, wobei der zentrale Server (10) auch eine "Internet"-Site-Verwaltung (12) besitzt, die mit der Datenbank (1) kommuniziert, welche "Internet"-Site über einen mit der Verwaltung von mindestens einem der audiovisuellen Wiedergabegeräte (100.1 bis 100.n) beauftragten Benutzer zugänglich ist und welcher über eine Vielzahl von Bildschirmen (200 bis 1010) verfügt, mit wenigstens einem ersten Bildschirm (200), der ein Ausrollmenü mit der Liste der lokal implementierten audiovisuellen Wiedergabegeräte (100.1 bis 100.n) umfasst, deren Betriebsdaten zur Verfügung stehen, wobei die Bestätigung der Wahl jedes gewählten Gerätes zur Wiedergabe von audiovisuellen Informationen (100.1 bis 100.n, Fig.1) zur Anzeige einer ersten Reihe von Bildschirmen (900, 1010) führt, was dem Benutzer erlaubt, die Konfiguration durch Ändern der Betriebsparameter von wenigstens einem Gerät zur Wiedergabe von audiovisuellen Informationen (100.1 bis 100.n, Fig.1) zu verwalten, indem der Server eine Datei mit Änderungsbefehien, die der Server aufgrund von Informationen aus der Datenbank gewinnt, an die betroffenen Geräte schickt.

2. System zur Fernverwaltung von wenigstens einem Gerät zur Wiedergabe von audiovisuellen Informationen nach Anspruch 1, **dadurch gekennzeichnet, dass** die Bestätigung der Wahl jedes ausgewählten Geräts zur Wiedergabe von audiovisuellen Informationen (100.1 bis 100.n, Fig.1) auf dem ersten Bildschirm (200) zur Anzeige einer zweiten Reihe von Bildschirmen (500 bis 800) führt, was dem Benutzer erlaubt, durch Fernsteuerung für wenigstens ein Lied die zugehörigen audiovisuellen Informationen von den Systemen zur Wiedergabe von audiovisuellen Informationen (100.1 bis 100.n, Fig.1) aus einer Liste von ausgewählten Wiedergabegeräten (100.1 bis 100.n Fig.1) zu laden oder wenigstens eine audiovisuelle Aufnahme und/oder eine dritte Reihe von Bildschirmen zu löschen, die Informationen zur Verwaltung des Betriebs eines Geräts zur Wiedergabe von audiovisuellen Informationen (100.1 bis 100.n, Fig.1) anzeigt.

3. System zur Fernverwaltung von wenigstens einem Gerät zur Wiedergabe von audiovisuellen Informationen nach Anspruch 1 oder 2, **dadurch gekennzeichnet, dass** die auf dem Bildschirm angezeigten Informationen relativ zum Betrieb jedes Geräts zur Wiedergabe für audiovisuelle Informationen (100.1 bis 100.n, Fig. 1) sowie die Liste der verfügbaren Lieder vom Verwalter (12) der "Internet"-Site in der Datenbank (11) abgespeichert werden.

4. System zur Fernverwaltung von wenigstens einem Gerät zur Wiedergabe von audiovisuellen Informationen nach Anspruch 1, 2 oder 3, **dadurch gekennzeichnet, dass** die vom Benutzer vorgenommenen Änderungen in der ersten und/oder zweiten Bildschirmreihe In einer Datei gespeichert werden und in die Sprache der Datenbank (11) übersetzt werden, um die in diesen Blldschirmrelhen geänderten Daten zu aktualisieren und auch jedes Gerät zur Wiedergabe von audiovisuellen Informationen (100.1 bis 100.n, Fig.1) zu aktualisieren, dann, wenn eine Änderung zwischen dem zentralen Server (10) und jedem Gerät zur Wiedergabe von audiovisuellen Informationen (100.1 bis 100.n, Fig.1) auftritt.

5. System zur Fernverwaltung von wenigstens einem Gerät zur Wiedergabe von audiovisuellen Informationen nach einem der Ansprüche 1 bis 4, **dadurch gekennzeichnet, dass** der Verwalter der "Internet"-Site (12) über Mittel zur Identifikation (400) des Benutzers verfügt, so dass der Zugang des Benutzers zu den Geräten zur Wiedergabe (100.1 bis 100.n, Fig.1) von audiovisuellen Informationen, über die er verfügen kann, eingeschränkt wird.

6. System zur Fernverwaltung von mindestens einem Gerät zur Wiedergabe von audiovisuellen Informationen nach einem der Ansprüche 1 bis 5, **dadurch gekennzeichnet, dass** die Bildschirme der ersten und der zweiten Bildschirmreihe über eine Instrumentenleiste (300) verfügen, welche eine Vielzahl von Auswahlknöpfen (301 bis 308) enthält, die entweder die Anzeige eines Bildschirms der ersten oder der zweiten Bildschirmreihe oder die Bestätigung der auf dem Schirm während der Anzeige durchgeführten Operationen bewirken.

7. System zur Fernverwaltung von mindestens einem Gerät zur Wiedergabe von audiovisuellen Informationen nach Anspruch 6, **dadurch gekennzeichnet, dass** ein erster Auswahlknopf (301) der Instrumenterileiste (300) die Anzeige eines dritten Bildschirms (400) bewirkt, der ein erstes Fenster (401) umfasst, das Informationen bezüglich zum vom Benutzer ausgewählten Gerät zur Wiedergabe von audiovisuellen Informationen anzeigt und eine Schaltfläche (402), um die Informationen des ersten Fensters (401) zu aktualisieren, wenn dafür Platz vorhanden ist.

8. System zur Fernverwaltung von mindestens einem Gerät zur Wiedergabe von audiovisuellen Informationen nach Anspruch 6 oder 7, **dadurch gekennzeichnet, dass** ein zweiter Auswahlknopf (302) der Instrumentenleiste (300) die Anzeige eines vierten Bildschirms (500) aus der zweiten Bildschirmreihe bewirkt, der eine Vielzahl von Schaltflächen (505.i, 501.i, 502) beinhaltet, der dafür vorgesehen ist, um die Auswahlkriterien zur Auswahl der Lieder zu definieren, wobei die Liste der entsprechenden Lieder In einer ersten Etappe in der Datenbank (11) durch den Verwalter (12) der Site mittels Übermittlung einer Anforderung gespeichert wird, welche die vom Benutzer mittels der Schaltflächen (505.i, 501.i, 502) gewählten Kriterien enthält, und welche in einer zweiten Etappe in einem Fenster (507) des Bildschirms (500) angezeigt wird.

9. System zur Fernverwaltung von mindestens einem Gerät zur Wiedergabe von audiovisuellen Informationen nach Anspruch 8, **dadurch gekennzeichnet, dass** die Bestätigung der Wahl eines Liedes aus dem Fenster (507) des vierten Bildschirms (500) die Anzeige eines fünften Bildschirms (60) bewirkt, der eine Vielzahl von Feldern (601.1 bis 601.4) umfasst, welche Identifikationsmerkmale des ausgewählten Liedes enthalten, ein Fenster (602) mit der Liste der vom Benutzer gesteuerten Geräte zur Wiedergabe von audiovisuellen Informationen, eine erste Auswahlfläche (603), weiche aufgrund einer Anforderung an den Verwalter (12) der Site den Ankauf des gewählten Liedes für die vom Benutzer im geöffneten Fenster (602) bestimmten Geräte zur Wiedergabe von audiovisuellen Informationen bestätigt, und eine zweite Auswahlfläche (604), welche die neuerliche Anzeige des vierten Bildschirms (500) bewirkt.

10. System zur Fernverwaltung von mindestens einem Gerät zur Wiedergabe von audiovisuellen Informationen nach Anspruch 6, **dadurch gekennzeichnet, dass** ein dritter Auswahlknopf (303) der Instrumentenleiste (300) die Anzeige eines sechsten Bildschirms (700) bewirkt, der in erster Reihe eine Vielzahl von Feldern (701.1 bis 701.7) enthält, welche Informationen über den Betrieb des vom Benutzer bestimmten Gerät zur Wiedergabe von audiovisuellen Informationen beinhalten, in zweiter Reihe ein erstes Fenster (702) bzw. ein zweites Fenster (704) umfasst, wobei das geöffnete Fenster die Liste der Lieder beinhaltet, die beim vom Benutzer bestimmten Gerät zur Wiedergabe von audiovisuellen Informationen durch Fernbedienung zu laden bzw. zu löschen sind, und In dritter Reihe eine erste Auswahlfläche (703) bzw. eine zweite Auswahlfläche (705), die die Stornierung der Fernladung bzw. die Löschung eines oder mehrerer vom Benutzer im ersten Fenster (702) bzw. zweiten Fenster (704) vorher ausgewählten Lieder bewirkt.

11. System zur Fernverwaltung von mindestens einem Gerät zur Wiedergabe von audiovisuellen Informationen nach Anspruch 6, **dadurch gekennzeichnet, dass** ein vierter Auswahlknopf (304) der Instrumentenleiste (300) die Anzeige eines siebten Bildschirms (800) bewirkt, der eine Vielzahl von Feldern (801.1 bis 801.3) beinhaltet, welche statistische Informationen zum Betrieb des vom Benutzer ausgewählten Geräts zur Wiedergabe von audiovisuellen Informationen enthalten, ein erstes Fenster (802) bzw. ein zweites Fenster (803), wobei das geöffnete Fenster eine Liste der meist gespielten bzw. am wenigsten gespielten Lieder auf dem vom Benutzer ausgewählten Gerät zur Wiedergabe von audiovisuellen Informationen enthält, ein siebentes Fenster (800), das ebenfalls eine Auswahlfläche (804) beinhaltet, die das Löschen des vom Benutzer im geöffneten zweiten Fenster (804) ausgewählten Liedes oder der Lieder bewirkt.

12. System zur Fernverwaltung von mindestens einem Gerät zur Wiedergabe von audiovisuellen Informationen nach Anspruch 6, **dadurch gekennzeichnet, dass** ein fünfter Auswahlknopf (305) der Instrumentenleiste (300) die Anzeige eines Bildschirms (900) bewirkt, der eine erste Reihe von Schaltflächen (901) beinhaltet, die es einem Benutzer erlauben, für die betreffende Schaltfläche einen Preis zu wählen oder zu bestimmen und eine zweite Reihe von Schaltflächen (902), die es einem Benutzer erlauben, für jeden Preis die Anzahl der möglichen Markierungen nach dem Begleichen des Preises zu wählen oder zu bestimmen.

13. System zur Fernverwaltung von mindestens einem Gerät zur Wiedergabe von audiovisuellen Informationen nach Anspruch 6, **dadurch gekennzeichnet, dass** der achte Bildschirm (900) eine Vielzahl von Schaltflächen (911.1 bis 911.3, 912.1 bis 912.3, 913, 914) enthält, die es erlauben, die Steuerparameter der Tonwiedergabegeräte für das vom Benutzer ausgewählte Gerät zur Wiedergabe von audiovisuellen Informationen zu wählen und zu betätigen.

14. System zur Fernverwaltung von mindestens einem Gerät zur Wiedergabe von audiovisuellen Informationen nach Anspruch 6, **dadurch gekennzeichnet, dass** ein sechster Auswahlknopf (306) der Instrumentenieiste (300) die Anzeige eines neunten Bildschirms (1000) auslöst, der ein Fenster (1001) beinhaltet, das die Gesamtheit der vom Benutzer vorgenommenen Änderungen während seiner Onlinesession auf der Internet-Site, verwaltet vom Site-Verwalter (12), anzeigt, ferner eine erste Auswahlfläche (1003), die die Bestätigung der im ersten Fenster (1001) angezeigten Operationen auslöst, und eine zweite Auswahlfläche (1002), die alle diese Änderungen rückgängig macht.

15. System zur Fernverwaltung von mindestens einem Gerät zur Wiedergabe von audiovisuellen Informationen nach Anspruch 6, **dadurch gekennzeichnet, dass** ein siebter Auswahlknopf (307) die Anzeige eines Bildschirms (1010) ausläst, der mindestens eine Auswahlfläche (1010.1 bis 1010.5) beinhaltet, die es erlaubt, dass eine Sonderfunktion des Geräts zur Wiedergabe von audiovisuellen Informationen (100.1 bis 100.n, Fig.1) aktiviert oder deaktiviert wird.

16. System zur Fernverwaltung von mindestens einem Gerät zur Wiedergabe von audiovisuellen Informationen nach einem der Ansprüche 6 bis 8, **dadurch gekennzeichnet, dass** ein achter Auswahlknopf (308) der Instrumentenleiste (300) die Anzeige eines Bildschirms auslöst, der dafür vorgesehen ist, um eine Basiskonfiguration zu definieren, für den Fall des Fehlens der gesamten oder eines Teils der vom Benutzer gesteuerten Geräte zur Wiedergabe (100.1 bis 100.n, Fig.1) von audiovisuellen Informationen.

17. System zur Fernverwaltung von mindestens einem Gerät zur Wiedergabe von audiovisuellen Informationen nach einem der Ansprüche 1 bis 9, **dadurch gekennzeichnet, dass** die zweite Bildschirmrelhe (700, 800) einen Bildschirm (700) beinhaltet, der über ein erstes Auswahlmenü (701) zur Auswahl der vom Benutzer gewünschten Liederkategorie verfügt, über ein zweites Auswahlmenü (701) zur Auswahl des vom Benutzer gewünschten Liederstils und über eine Auswahlfläche (703), die die Auswahl des Benutzers bestätigt, wobei die Anzeige eines zweiten Bildschirms (800) ausgelöst wird, der in einem ersten Fenster (801) die Liste der Lieder enthält, die nach Kategorie und Stil den Wünschen des Benutzers entsprechen, in einem zweiten Fenster (802) die Liste der vom Benutzer aus der Liste des ersten Fensters ausgewählten Lieder enthält und eine Auswahlfläche (805), die die Auswahl des Benutzers bestätigt.

18. System zur Fernverwaltung von mindestens einem Gerät zur Wiedergabe von audiovisuellen Informationen nach Anspruch 17, **dadurch gekennzeichnet, dass** die Liste der angezeigten Lieder in der Datenbank unter den meist gespielten Liedern der Juke-Boxen des Benutzers, unter den meist gespielten Liedern der Juke-Boxen, die vom Server (10) gesteuert werden, oder unter den meist gespielten Liedern der Juke-Boxen der Einrichtungen einer bestimmten Kategorie gespeichert wird.

19. System zur Fernverwaltung von mindestens einem Gerät zur Wiedergabe von audiovisuellen Informationen nach Anspruch 10, **dadurch gekennzeichnet, dass** das zweite Fenster (802) auch die Liste der schon auf den Geräten zur Wiedergabe von audiovisuellen Informationen (100.1 bis 100.n, Fig.1) gespeicherten Lieder enthält.

20. System zur Fernverwaltung von mindestens einem Gerät zur Wiedergabe von audiovisuellen Informationen nach einem der Ansprüche 1 bis 11, **dadurch gekennzeichnet, dass** die dritte Bildschirmreihe mindestens einen Bildschirm aufweist, der ein Fenster beinhaltet, das die Liste der von den Geräten zur Wiedergabe von audiovisuellen Informationen (100.1 bis 100.n, Fig.1) gespielten Liedern anzeigt, sowie das Datum, an dem jedes Lied gespielt wurde, und/oder mindestens einen Bildschirm, der ein Fenster beinhaltet, welches das Datum oder die Daten anzeigt, an welchen das Gerät zur Wiedergabe von audiovisuellen Informationen von der Netzspannung genommen wurde und/oder an die Netzspannung angeschlossen wurde, und/oder ein Fenster, welches das Datum oder die Daten anzeigt, an denen eine Kommunikation zwischen dem Gerät zur Wiedergabe von audiovisuellen Informationen und dem zentralen Server unterbrochen wurde.

21. System zur Fernverwaltung von mindestens einem Gerät zur Wiedergabe von audiovisuellen Informationen nach Anspruch 10, **dadurch gekennzeichnet, dass** das System über ein magnetisches oder ein optisches Aufnahmesystem verfügt, so dass die vom Benutzer ausgewählten Lieder auf einem portablen magnetischen oder optischen Träger abgespeichert werden können.

22. System zur Fernverwaltung von mindestens einem Gerät zur Wiedergabe von audiovisuellen Informationen nach Anspruch 13, **dadurch gekennzeichnet, dass** die Aufnahme der Lieder auf einem portablen magnetischen oder optischen Träger im komprimierten Format und in verschlüsselter Weise erfolgt, wobei die Dekompression und die Entschlüsselung nur außerhalb des Abspielens des Liedes auf einem Gerät zur Wiedergabe von audiovisuellen Informationen (100.1 bis 100.n, Fig.1) erfolgt.
